# NEUE EUROPÄISCHE PATENTSCHRIFT

(11) **EP 1 123 189 B2**
(45) Veröffentlichungstag und Bekanntmachung des Hinweises auf die Entscheidung über den Einspruch: **08.02.2012**
(45) Hinweis auf die Patenterteilung: 29.01.2003
(21) Anmeldenummer: 99948638.4
(22) Anmeldetag: 22.10.1999
(51) Int. Cl.: B29C 45/72, B29C 35/16, B29B 11/08

(54) **SPRITZGIESSMASCHINE SOWIE VERFAHREN ZUR HERSTELLUNG VON HÜLSENFÖRMIGEN SPRITZGIESSTEILEN, INSBESONDERE PREFORMEN**
INJECTION MOLDING MACHINE AND METHOD FOR PRODUCING SLEEVE-SHAPED INJECTION MOLDED PARTS, ESPECIALLY PREFORMS
MACHINE DE MOULAGE PAR INJECTION ET PROCEDE DE PRODUCTION DE PIECES MOULEES PAR INJECTION EN FORME D'ENVELOPPES, NOTAMMENT DE PREFORMES

(30) Priorität: 22.10.1998 DE 19848837; 09.09.1999 CH 165499
(43) Veröffentlichungstag der Anmeldung: 16.08.2001
(60) Teilanmeldung: 02004846.8
(73) Patentinhaber: Netstal-Maschinen AG, CH-8752 Näfels (CH)
(72) Erfinder: WEINMANN, Robert, CH-8872 Weesen (CH); VIRON, Alan, Desmonts 45390Pu iseaux (FR); EGGER, Caspar, CH-8750 Glarus (CH); MEIER, Ernst, CH-8868 Oberurnen (CH)
(74) Vertreter: Wilhelm, Ludwig
(86) Internationale Anmeldenummer: PCT/CH1999/000501
(87) Internationale Veröffentlichungsnummer: WO 2000/024562

(56) Entgegenhaltungen:
- EP-A- 0 158 105
- EP-A- 0 372 671
- EP-A- 0 633 119
- EP-A- 0 718 084
- EP-A- 0 947 304
- US-A- 4 019 849
- US-A- 4 472 131
- US-A- 4 721 452
- US-A- 5 114 327
- US-A- 5 498 150
- US-A- 5 578 262
- PATENT ABSTRACTS OF JAPAN vol. 006, no. 196 (M-161), 5. Oktober 1982 (1982-10-05) & JP 57 103821 A (AOKI KATASHI), 28. Juni 1982 (1982-06-28)

## Beschreibung

### Technisches Gebiet

Verfahren für das chargenweise Herstellen einer grösseren Zahl von einseitig mit einem Boden verschlossenen hülsenförmigen Spritzgiessteilen, welche nach dem Spritzvorgang den Formen entnommen und nachgekühlt werden und dabei in Wasserkühlrohre eingeschoben und wieder ausgestossen und von einem halbstarren Zustand beim Öffnen der Formhälften mittels Wasserkühlung in einen formstabilen Lagerzustand gebracht und einem Weitertransport übergeben werden, ferner eine Spritzgiessmaschine zur Herstellung von hülsenförmigen, einseitig mit einem Boden verschlossenen Spritzglesstellen, bestehend aus einem Formschlless- und Öffnungsmechanismus, Entnahme- und Nachkühleinrichtungen, bei denen zumindest entsprechend der Zahl der pro Zyklus hergestellten Spritzgiessteile Wasserkühlrohre für die Spritzgiessteile vorgesehen sind, wobei der Einschiebeseite für die Spritzgiessteile gegenüberliegend und mit dem Kühlrohraufnahmeraum für die Spritzgiessteile verbunden ein Druck- bzw. Unterdruckraum angeordnet ist.

### Stand der Technik

Bei der Herstellung von den Typisch dickwandigen Spritzgiessteilen der oben genannten Art ist für die erreichbare Zykluszeit die Kühlzeit, insbesondere die Nachkühlzeit, ein wichtiger und bestimmender Faktor. Die Hauptkühlleistung findet noch in den Giessformhälften statt. Beide Giessformhälften werden während dem Giessprozess intensiv wassergekühlt, so dass die Temperatur noch in der Form von etwa 280°, wenigstens in den Randschichten, bis etwa 70° bis 80° C gesenkt werden kann. 2/3 der Kühlleistung erfolgt dabei über den Kern, 1/3 über die Aussenkühlung der entsprechenden Spritzgiessformen. Es wird in den äusseren Schichten sehr rasch die sogenannte Glastemperatur von etwa 140° C durchfahren. Der eigentliche Giessvorgang bis zur Entnahme der Spritzgiessteile konnte auf etwa 13 bis 15 Sekunden gesenkt werden, mit optimalen Qualitäten in Bezug auf die noch halbstarren Spritzgiessteile. Die Spritzgiessteile müssen so stark verfestigt werden, dass diese mit relativ grossen Kräften der Auswurfhilfen angefasst und ohne Deformation bzw. Schäden einer Entnahmevorrichtung übergeben werden können. Die Entnahmevorrichtung weist eine den Spritzggiessteilen angepasste Form auf, damit während der nachfolgenden Behandlung die Form der Spritzgiessteile exakt erhalten bleibt. Die intensivere Wasserkühlung in den Giessformhälften erfolgt physikalisch bedingt und in Bezug auf die enorme Wandstärke stark zeitverzögert, von aussen nach innen. Dies bedeutet, dass die 70° bis 80° C nicht einheitlich im ganzen Querschnitt *erreicht* werden. Die Folge ist, dass eine rasche Rückerwärmung, im Materialquerschnitt gesehen, von innen nach aussen erfolgt, sobald die Intensive Kühlwirkung unterbrochen wird. Der sogenannten Nachkühlung kommt aus zwei Gründen grösste Bedeutung zu: Erstens sollen jegliche Formänderungen bis zum formstabilen Lagerzustand, aber auch Oberflächenschäden, etwa Druckstellen, usw. vermieden werden. Es muss zweitens verhindert werden, dass die Abkühlung im höheren Temperaturbereich zu langsam erfolgt und sich z.B. durch Rückerwärmungen örtlich schädliche Kristallbildungen einstellen. DasZiel ist ein gleichmässig amorpher Zustand im Material der vergossenen Form. Die Oberfläche der Spritzgiesstelle darf nicht mehr klebrig sein, weil sonst in den relativ grossen Kisten bzw. Abpackgebinden mit Tausenden von lose eingeschütteten Teilen an den Berührungspunkten Haftschäden entstehen können. Die Spritzgiessteile dürfen auch bei leichter Rückerwärmung eine Oberflächentemperatur von 40°C nicht überschreiten.

Die Praxis zeigt, dass die Nachkühlung nach der Entnahme der Giessteile aus der Spritzgiessform genau so wichtig wie ist, die Hauptkühlung in den Giessformen. Der Giessfachmann weiss, dass selbst kleine Fehler grosse Auswirkungen haben können. Beim Testen neuer Materialien, besonders aber bei Produktionsunterbrüchen durch Prozessfehler, kann es vorkommen, dass die heissen Spritzgiessteile etwas zu lange auf den dornartigen Positivformen verbleiben. Die Folge kann sein, dass durch den weiter-gehenden Schrumpfvorgang in den Spritzgiesstellen, bedingt durch die Abkühlung, diese mit den normalen Ausstosskräften der Maschine nicht mehr abgestossen und nur noch mit speziellen Hilfseinrichtungen von den Formen gelöst werden können.

Gemäss einer ersten Technik des Standes der Technik (EP-A-0 266 804) wird auch Wasser als Kühlmittel für die Nachkühlung eingesetzt. Das im halberstarrten Zustand aus der Spritzgiessform entnommene Spritzgiessteil wird in wassergekühlten Transport und Nachkühleinrichtungen soweit abgekühlt, bis ein formstabiler Endzustand erreicht ist. Die noch halbstarren Spritzgiessteile werden unmittelbar nach der Entnahme aus den Formhälften in von Kühlwasser umströmte Kühlkonen eingcschoben. In der letzten Phase des Einschubvorganges wird das Spritzgiessteil mit Hilfe von Unterdruck noch ganz in die Kühlkonen eingezogen und von aussen gekühlt.

Die Unterdruck-beaufschlagung erfolgt über einen Luftraum bzw. Druckraum, mit dem der Innenraum der beidseits offenen Kühlhülse direkt verbunden ist. Die Innenkontur der Kühlrohre ist in gleicher Weise wie die Aussenkontur des hülsenförmigen Spritzgiessteils relativ stark konisch geformt. Dadurch wird das Spritzgiessteil während der Abkühlphase und dem damit einhergehenden Schwund durch die Unterdruckbeaufschlagung, zumindest theoretisch, stets nachgezogen. Auf diese Weise wird versucht sicherzustellen, dass das Spritzgiessteil optimal im Kühlkontakt mit der konischen Innenwandung der Kühlkonen bleibt. In der Praxis ist der dargestellte ideale Kühlkontakt nicht immer erreichbar. Bei einer bekannten Lösung werden die Spritzgiessteile liegend nachgekühlt. Dabei verhindern kleinste Haftstellen das gedachte, ständige Nachziehen. Nach Beendigung der betreffenden Kühlphase bzw. nach Erreichen eines formatabilen Zustandes des hölsenförmigen Spritzgiessteils wird im genannten Luftraum der Unterdruck abgeschaltet und Überdruck erzeugt. Alle Spritzgiessteile werden danach durch Umschalten auf Luftüberdruck kolbenartig aus den konischen Kühlhülsen ausgestossen.

Eine zweite Technik, die sogenannte Luftkühlung, ist In der US-A-4 592 719 beschrieben. Dabei wird vorgeschlagen, die Produktionsrate der Preformen dadurch zu erhöhen, dass anstelle von einer getrennten Nachkühlungsstation atmosphärische Luft zur Kühlung verwendet wird. Die Luft wird als Kühlluft während dem Transport bzw. "Hendling" durch gezielte Strömungsführung, sowohl innen wie aussen, an den Preformen mit maximaler Kühlwirkung eingesetzt. Eine Entnahmevorrichtung, welche so viele Saugrohre aufweist, wie in einem Spritzzyklus Teile hergestellt werden, fährt zwischen den beiden offenen Formhälften ein. Die Saugrohre werden sodann über die Preformen geschoben. Gleichzeitig beginnt über eine Saugleitung, Luft im Bereich der ganzen von den Saugrohren umfassten Umfangsfläche der Spritzgiessteile zu strömen, so dass diese vom Moment der Übernahme in die Saughülse mit der Luft von aussen gekühlt werden. Die Entnahmevorrichtung fährt nach vollständiger Übernahme aller Spritzgiessteile eines Giesszyklusses aus dem Bewegungsraum der Formhälften heraus. Die Formhälften sind sofort wieder frei für den nachfolgenden Giesszyklus. Die Entnahmevorrichtung verschwenkt die Preformen nach der Ausfahrbewegung von einer horizontalen in eine aufrechte Lage. Gleichzeitig fährt eine Transfervorrichtung exakt in eine Übergabeposition über der Entnahme-Vorrichtung. Die Transfervorrichtung weist eine gleiche Zahl Innengreifer auf wie die Entnahmevorrichtung Saugrohre hat. Rechtzeitig nach der Übergabe aller Spritzgiessteile und vor dem erneuten Öffnen der Formhälften wird die Entnahme-Vorrichtung zurück in die Einfahrposition geschwenkt, so dass die nächste Charge Spritzgiessteile den Formen entnommen werden kann. Die Transfervorrichtung übergibt in der Zwischenzeit die neuen, formstabilen Spritzgiessteile einem Trans-porteur und fährt ohne die Preformen auch wieder zurück in die Übernahmeposition für die nächste Charge.

Der Hauptnachteil der Lösung gemäss US-A-4 592 719 liegt darin, dass die Nachkühlzeit sozusagen unveränderbar gleich der Giesszykluszeit ist. Auch wenn durch geeignete Luftführungen allenfalls kleinere Steigerungen der örtlichen Luftgeschwindigkeiten und damit eine gewisse Verkürzung erreichbar ist, so ist doch die unabänderliche Physik des Luftkühlvorganges absolut bestimmend für die Produktionsrate. Eine Steigerung wäre nur möglich durch eine Vergrösserung der pro Giesszyklus in einer Mehrfachgiessform hergestellten Sprltzgiesstelle. Diese Stückzahl ist aber in aller Regel durch den maximalen Pressendruck der Spritzgiessmaschine beschränkt. Die vorgeschlagene technische Lehre, die Preformen sowohl Innen wie aussen während der Entnahme und dem Transport mit Luft zu kühlen, ergibt systembedingt eine Beschränkung der maximal möglichen Produktionsmenge. Die Nachkühlzeit beschränkt hier die Leistungsfähigkeit der Anlage.

Ein Verfahren und eine Vorrichtung gemäß der Oberbegriffen der Ansprüche 1 und 14 ist bekannt aus EP-A-0718084. Die EP-A-0718084 weist drei unterschiedliche Vorrichtungen auf: eine Entnahmevorrichtung und eine Transfervorrichtung sowie eine Nachkühleinrichtung. Der Transfergreifer hat eine Doppelfunktion, da die Petformen sowohl in die Nechkühleinricntung gebracht, wie daraus wieder entnommen werden. Dabei wird vorgeschlagen, auf eine Kühlung in der Transfervorrichtung zu verzichten, um durch entsprechende Gewichtsersparnis raschere Bewegungen durchführen zu können.

Die nachveröffentlichte EP-A-0 947 304 schlägt eine zentrale Kühlung eine Innenkühlung mit Luft durch eine kombinierte Vorrichtung vor. Die Kombination in einer Vorrichtung umfasst die Funktion einer Transfervorrichtung sowie einer eigentlichen Nachkühlung von innen, bis eine Kristallisation im Inneren vollständig verhindert wird.

Die eingangs erwähnte Wasserkühlmethode unterliegt zwar auch gewissen Beschränkungen. Die Praxis zeigt jedoch, dass mit der Wasserkühlung bei gleicher Kavitätenzahl durch Senken der Zykluszeit eine viel grössere Stückzahl an Spritzgiesstellen produzierbar ist, vorausgesetzt, dass ideale Bedingungen eingehalten werden können. Die Kavitäten der Spritzgiessform können Unregelmässigkeiten haben, was zu Differenzen in der Aussenkontur der hülsenförmigen Spritzgiessteile führt. In gleicher Weise sind nicht alle Innenkonturen der Kühlhülsen exakt gleich.

Dies führt dazu, dass manche der hülsenförmigen Spritzgiessteile nach Beendigung der Kühlphase bereits durch das Eigengewicht aus der Kühlhülse gleiten und andere hulsenförmige Spritzgiessteile noch in den Kühlrohren haften bleiben oder sogar darin klemmen. In einer derartigen Situation sinkt der Abblasdruck im Druckraum durch die vorab entieerten Kühlrohre auf Umgebungsdruckniveau ab und reicht nicht mehr aus, um die noch in einigen Kühlrohren verbliebenen und zum Teil noch leicht klemmenden hülsenförmigen Spritzgiessteile auszustossen. Dies führt zu einer Unterbrechung bis zum nachfolgenden Produktionszyklus. Weil die in einigen Kühlrohren verbliebenen hülsenförmigen Spritzgiessteile die Aufnahme neuer Spritzgiessteile versperren, müssen diese von Hand entnommen werden.

### Darstellung der Erfindung

Der Erfindung wurde nun die Aufgabe zugrunde gelegt, eine Spritzgiessmaschine bzw, das entsprechende Verfahren zur Herstellung von hülsenförmigen Spritzgiessteilen so zu verbessern, dass bei Gewährleistung einer optimalen Kühlwirkung die Produktivität gesteigert und insbesondere eine Unterbrechung des Produktionszyklusses z.B. durch hängenbleibende Spritzgiessteile, nahezu ausgeschlossen werden kann.

Diese Aufgabe wird gelöst durch das Verfahren und die Vorrichtung gemäß den Ansprüchen 1 und 13. Das Verfahren gemäß dem Anspruch 1 ist dadurch gekennzeichnet, dass im Nachkühlbereich den Spritzgießteilen zur Verbesserung der luftseitigen Einwirkung mechanisch verschiebbare Elemente zugeordnet sind, dass für den Bereich des offenen Einschiebeendes der Wasserkühlrohre die verchiebbaren Elemente als Luftdüsen ausgebildet sind, welche zyklisch in die Spritzgießteile eingeschoben werden, und Behandlungsluft in das Innere der Spritzgießteile einbringen und absaugen, und dass die Spritzgiessteile durch eine Entnahmevorrichtung aus den geöffneten Formen entnommen und über einen Transfergreifer einer Nachkühleinrichtung und im formstabilen Lagerzustand von der Nachkühleinrichtung an einen Weitertransport übergeben werden, wobei die Übergabe der Spritzgiessteile durch Luftdüsen für eine Innenkühlung der Spritzgiessteile, die am Transfergreifer angeordnet sind, erfolgt.

Die Vorrichtung gemäß dem Anspruch 13 ist dadurch gekennzeichnet, dass wenigstens je ein mechanisch verschiebbares Element für die Optimierung der Lufteinwirkung auf jedes Spritzgießteil vorgesehen ist, dass das verschiebbare Element in dem Bereich des Kühlrohreinschiebeendes für die Spritzgießteile angeordnet und als Luftdüse ausgebildet ist, und dass sie einen Transfergreifer mit, entsprechend der Zahl der zu kühlenden Spritzgiessteile, Luftdüsen für eine Innenkühlung der Spritzgiessteile aufweist, über welche die Spritzgiessteile von der Entnahmevorrichtung in die Nachkühleinrichtung übergebbar sind, wobei die Luftdüsen als Saugblasdorne ansgebildet sind.

Von den Erfindern ist erkannt worden, dass im geschilderten Stand der Technik die Begrenzung der maximal möglichen Produktion gleichsam durch die "Reinheit der angewendeten Lehre" selbst auferlegt wurde. Ein vollständiges Mischsystem ist naturgegeben nicht möglich, da auf einer Seite gleichzeitig nur ein Kühlmedium, Luft oder Wasser, einsetzbar ist. Werden nun aber die beiden Medien je mit ihren eigenen Vorzügen gezielt eingesetzt, dann wird erst das Optimum erreicht. Die neue Lösung baut auf der sehr effizienten Wasserkühlung auf, nutzt aber die Luftkräfte zentral durch den Einsatz von mechanisch verschiebbaren Elementen zur Verbesserung der luftseitigen Einwirkung. Damit eröffnen sich gleichsam zwei neue Teillösungswege, nämlich durch die Einwirkung auf der Ebene des Luftdruckes sowie der Ebene der Luftströmung als Kühlunlerstützung. Die Untersuchungen aufgrund der neuen Erfindung haben neue Erkenntnisse an den Tag gebracht. Aufgrund des Giossprozesses muss gefolgert werden, dass die Innenkühlung mit Wasser zweimal so effizient ist wie die Aussenkühlung mit Wasser. Diese Aussage gilt jedoch nur für die Phase des Giessens. Für die Phase der Nachkühlung wurde aus einer ganzen Anzahl Gründen der Aussenkühlung mit Wasser der Vorzug gegeben. Ein sehr wichtiger Grund ist der parallele Vorgang von Kühlen und Schrumpfen. Erfolgt die intensivere Kühlung von aussen, dann löst sich die Preform von den aussen liegenden Kühlhülsen, Der umgekehrte Fall wäre in dieser Beziehung sehr nachteilig, da dann die Gefahr bestünde, dass einzelne hülsenförmige Spritzgiessteile sich auf den Kühldornen festklemmen könnten. Der Schrumpfvorgang hat im ersten Fall den Nachtell, dass sich das Spritzgiessteil immer mehr von der Wandung löst und der direkte Kühlkontakt ausfällt und damit die Kühlwirkung sich verschlechtern kann. Dieser Nachteil tritt dann in den Vordergrund, wenn die Spritzgiessteile während der ganzen Phase der Nachkühlung in ein und demselben Kühlrohr verharren. Wie noch gezeigt wird, erlaubt die neue Erfindung auch hier eine Verbesserung durch zwei- oder mehrmaliges "Umstecken" der Spritzgiessteile in einer entsprechend konzipierten Nachkühleinrichtung.

Ein anderer Problemkreis wurde in der Problematik der Dickwandigkeit erkannt, vor allem jedoch in dem Bereich des Bodens der Spritzgiesshülsen. Bei den Lösungen des Standes der Technik mit Wasserkühlung wird diese Zone wesentlich schlechter erreicht. Hier wurden Mittel und Wege gesucht, um diesen besonders kritischen Punkt zu verbessern. Im Hinblick auf die Aufgabenstellung, nämlich eine Produktivitätssteigerung bei maximal möglicher Produktqualität, wurde gleichsam nach einer Entkoppelung der bisherigen strengen Bindung von Giesszyklus und Nachkühlung gesucht. Die neue Erfindung ertaubt nun eine ganze Anzahl besonders vorteilhafter Ausgestaltungen im Hinblick auf die gestellte Aufgabe bzw. die aufgezeigten Probleme.

Dem Einschiebeende der Wasserkühlrohre gegenüberliegend wird, wie im Stand der Technik, ein kontrollierbarer Druck- bzw. Unterdruckraum vorgesehen. Gemäss der neuen Lösung wird jedoch der Druckraum gegenüber dem Innenraum der Kühlrohre verschllessbar und mit verschiebbaren Elementen, z.B. als Ventlielemente oder Kolbenelemente, ausgebildet. Durch die Ventilwirkung werden die Spritzglessteile bei Unterdruck angesaugt und sicher gehalten. Bei Überdruck in den Druckraum wird das Ausstossen der Spritzgiessteile unterstützt.

Im Stand der Technik bildete das Spritzgiessteil mit einer ganzen Querschnittsfläche gleichsam den Schifesskolben eines Ventlies. In der Ansaugphase werden gleichzeitig z.B. 96 Spritzgiessteile angesaugt. Weil jedes Spritzgiessteil for sich mit dem verschlossenen Boden und der im Durchmesser grösseren offenen Gewindeseite gegenüber den Wasserkühlrohren ein Pfropfen bildet, wird das weitere Ansaugen von Luft gestoppt. Der auf der Gegenseite erzeugte Unterdruck bleibt bis zur Umsteuerung erhalten. Wird nun an Stelle von Unterdruck ein Überdruck erzeugt, werden gleichzeitig alle 96 Spritzgiesseile durch die Luftdruckwirkung ausgestossen. Ist die Gleichzeitigkeit des Aussrossens nicht möglich, weil ein Teil schneller aus der Kühlhülse flieht, bricht im Stand der Technik der Luftdruck zusammen. Es besteht jedesmal die Gefahr, dass für diejenigen Preformen, die sich nur harzig austreiben lassen, der verbleibende Luftdruck nicht mehr genügt. Gemäss der neuen Lösung wird nun ein zusätzliches Hilfsventil mit wesentlich kleinerem, freiem Strömungsquerschnitt jedem Spritzgiessteil zugeordnet. Wenn z.B. nur gut die Hälfte sofort ausgestossen wird, kann auf diese Weise für die übrigen der Luftdruck aufrecht erhalten oder gar gesteigert werden. Das Hilfsventil versperrt, nachdem das betreffende Spritzgiessteil ausgestossen wurde, den Durchgang in dem Wasserkühlrohr dicht.

Gemäss einer weiteren, ganz besonders vorteilhaften Weiterausbildung wird den Wasserkühlrohren auf der Seite des Druck- bzw. Unterdruckraumes ein gewölbtes Bodenteil zugeordnet, derart, dass zwecks Intensivierung der Wasserkühlwirkung das Spritzgiessteil mit seinem halbkugelförmigen Boden in das gewölbte Bodenteil des Wasserkühlrohres eintaucht bzw. durch den Unterdruck in die Wölbung eingesaugt wird. Vorteilhafterweise wird je ein gewölbtes Bodenteil spielfrei mit den Wasserkühlrohren verbunden bzw. ist Teil der Wasserkühlrohre. In einer kleinen mittleren Durchgangsöffnung ist ein verschiebbarer Ventilstift angeordnet. Versuche haben gezeigt, dass z.B. bei der Konuslösung zwei sehr wichtige Aspekte bisher übersehen wurden: Zum einen ist ein besonders kritisches Teil gerade der ganze Bereich des Spritzgiessteilbodens. Das gedachte ständige Nachziehen setzt zwingend voraus, dass das Spritzgiessteil nicht von Anfang an gleichsam am Boden ansteht. Die Konsequenz ist, dass der Boden des Spritzgiessteils nicht bzw. ungenügend gekühlt wird. Der zweite Aspekt liegt darin, dass bei einer Temperatur von 70 bis 80°C der Strahlungsanteil noch relativ hoch ist. Auch wenn sich nach wenigen Sekunden durch das Schrumpfen ein geringfügiges Spiel nach aussen einstellt, ist dies am Anfang der Nachkuhlung nicht gravierend. Der Kühlgewinn durch die Kontaktfläche Im Bodenbereich wiegt mehr als der leichte Verlust auf der Umfangsfläche. Hinzu kommt, dass nunmehr die Konizität des Spritzgiessteiles auf das reine giesstechnische Erfordernis beschränkt bleiben kann.

Gemäss der Erfindung sind für den Bereich des offenen Einschiebeendes der Wasserkühlrohre die verschiebbaren Elemente als Luftdüsen ausgebildet, welche zyklisch in die Spritzgiessteile eingeschoben werden und Behandlungsluft in das Innere der Spritzgiessteile einbringen und absaugen können. Dadurch ist es gelungen, die Köhlwirkung, insbesondere in Kombination mit der zuvor beschriebenen äusseren Bodenkühlung, auf eine maximale Wirkung zu bringen, auch an der Zone, die im Stand der Technik gleichsam der Engpass für die Kühlung war. Dies trifft vor allem dann zu, wenn die innere Kühlluft In Bodennähe eingeblasen wird.

Der ganze Bereich der Nachkühlung wird dreistufig ausgebildet und weist eine Entnahmevorrichtung, einen Transfergreifer sowie eine Nachkühleinrichtung auf. Die Luftdüsen sind Teil des Transfergreifers und übergeben als Zentrierdorne ausgebildet die Spritzgiessteile von der Entnahmevorrichtung an die Nachkühleinrichtung. Eine übergeordnete Steuerung ist vorgesehen, welche tektmässig die Transportschritte und zyklisch die Kühlphasen koordiniert. Die Bewegungszyklen bzw. Verfahrenseingriffe der Entnahmevorrichtung, des Transfergreifers sowie der Nachkühteinrichtung können dabei für eine Prozessoptimierung oder für die Herstellung eines neuen Produktes bzw. einer neuen Produktqualität unabhängig eingestellt werden. Die Transfereinheit übernimmt mittels der Luftdüsen bzw. Zentrierdorne die Spritzgiessteile von dem Entnahmegreifer in einer horizontelen Lage. Mit einer Verschwenkbewegung werden die Spritzgiessteile in eine aufrechte Lage ge-bracht und in die wassergekühlten Hülsen der Nachkühleinrichtung geschoben. Bei der Übergabe der Spritzgiessteile von dem Entnahmegreifer verharren die Luftdüsen in ei-ner eingeschobenen Position, vorzugsweise während mehreren Sekunden. Dabei kommt eine Intensivblaskühlung, besonders des halbkugelförmigen Bodens, an der Innenseite der Spritzgiessteile zum Einsatz. In dieser Phase wird das Spritzgiessteil, vor allem auch an der meist kritischen Partie, von innen und von aussen, also doppelt gekühlt.

Mit der neuen Lösung wird die Luftwirkung auf verschiedene Arten bestmöglich genutzt, sei es als Kühlmittel oder über Druck- bzw. Unterdruckkräfte. Damit lässt sich sowohl das sogenannte Handling wie auch die Erstarrungsphase stark verbessern. Die Druckverhältnisse und die Strömungsvcrhältnisse werden beidseits in Bezug auf die Spritzgiessteilböden unabhängig gesteuert. Es wird koordiniert ein Blassluftstrom und/oder ein Unterdruckzustand erzeugt, so dass entsprechend die Spritzgiessteile durch Unterdruck auf der einen oder anderen Seite gehalten bzw. durch einen Druckstoss in die eine oder andere Richtung bewegbar sind. Die Luftdüsen werden als Saugblasdorne ausgebildet mit Saugöffnungen für den Bereich des offenen Endes der Spritzgiessteile. Verschiedene Betriebszustande können eingestellt werden, z.B. ein dominanter Luftblasstrahl in dem Bereich des verschlossenen Bodenendes im Inneren der Spritzgiessteile oder eine starke Vakuumwirkung innerhalb des Spritzgiessteils oder eine Mischform zwischen den beiden. Dies ist deshalb besonders vorteilhaft, weil die ganz unterschiedlichen Phasen ohne Zeitverlust ineinander übergeführt werden und sich zum Teil optimal überlappen. Dies bedeutet, dass in der Nachkühlphase der nächstfolgende Schritt schon beginnen kann, bevor der vorangehende voll abgeschlossen ist. Der Transfergreifer und die Entnahmevorrichtung sind für die Aufnahme einer gleichen Zahl von Spritzgiessteilen konzipiert wie das Spritzgfesswerkzeug. Die Nachkühleinrichtung weist dagegen bevorzugt parallel angeordnet Zwei- oder Mehrfachreihen von gegebenenfalls ver-setzten Wasserkühlrohren auf. Durch entsprechendes Querverschieben und Längsverschieben kann die Nachkühleinrichtung zwei oder mehrere Chargen von Spritzgiessteilen je eines Spritzgiesszyklusses zur Reduktion der Giesszykluszeit und Erhöhung der Nachkühlzeit aufnehmen. Die neue Lösung erlaubt durch die aufgezeigten Massnahmen eine starke Effizienzsteigerung. Die Phase der Entnahme der Spritzgiessteile aus den Formhälften und der vollständigen Übergabe an die Nachkühieinrichtung entspricht angenähert der Zeitdauer eines auf ein Minimum verkürzten Giesszyklusses. Die totale Nachkühlzeit kann jedoch auf eine zwei- bis dreifachen Giesszykluszeit erhöht werden. Die neue Lösung gestattet dabei gezielt in bestimmten Phasen eine doppelte Kühlung von innen und aussen auf die Spritzgiessteile. dies während einem bedeutenden Anteil der Giesszykluszeit, unmittclbor nach der Entnahme der Spritzgiessteile aus den Formhälften. Für eine ganze Anzahl sehr vorteilhafter Weiterausgestaltungen der Vorrichtung wird auf die Ansprüche 1 bis 2, Bezug genommen.

Die Erfindung betrifft ferner die Anwendung des Verfahrens für den Bereich der Spritzgiessteilentnahme und/oder für den Bereich der Nachkühlung, wobei wenigstens die Ausstossung der Spritzgiessteile durch Luftdruck durch ein verschiebbares Ventilelement luftseitig unterstützt erfolgt, und die Wasserkühlwirkung am Ende der Spritzgiessteilentnahme sowie am Anfang der Nachkühlung durch mechanisch in das ins Innere der Spritzgiessteile verschiebbare Luftblasdüsen ergänzt wird.

Die Erfindung betrifft ferner die Verwendung von verschiebbaren Ventilstiften zur Unterstützung der Ausstosswirkung von Druckluft und/oder Blasdornen, welche in das Innere der Spritzgiessteile verschiebbar sind, zur Unterstützung der Kühlwirkung, vor allem im Bodenteilbereich der Spritzgiessteile für den Einsatz bei der Entnahmevorrichtung sowie der Nachkühleinrichtung bei Spritzgiessmaschinen.

### Kurze Beschreibung der Erfindung

Die Erfindung wird nachfolgend mit einigen Ausführungsbeispielen sowie schematischen Zeichnungen näher erläutert. Es zeigen:
- die Figur 1: schematisch eine ganze Spritzgiessmaschine mit Entnahme-, Transfer- und Nachkühleinrichtungen für die Spritzglesstelie,
- die Figuren 2a und 2b: zwei verschiedene Handlings- bzw. Übergabesituationen für die Preformen;
- die Figur 3: eine bekannte Lösung des Standes der Technik für die Wasserkühlung von Preformen;
- die Figur 4: ein Beispiel einer Lösung gemäss der neuen Erfindung;
- die Figuren 5a, 5b und 5c: eine besonders interessante Ausgestaltung der neuen Lösung in Bezug auf die Aussenkühlung und den Einzug bzw. das Ausstossen der Spritzgiessteile;
- die Figuren 6a bis 6f: verschiedene Teile und Dispositionen für die Innenkühlung mittels Luftdüsen bzw. Zentrierdorne;
- die Figuren 7e bis 7d: verschiedene Handlingssituationen zwischen Entnahmegreifer sowie Transfergreifer;
- die Figuren 8a bis 8d: verschiedene Handlingssituationen zwischen Transfergreifer sowie der Nachkühleinrichtung;
- die Figuren 9a und 9b: ein Schnitt bzw. Ausschnitt der Nachkühleinrichtung;
- die Figur 10: schematisch die verschiedenen Zyklen bei der Herstellung von Preformen,

### Wege und Ausführung der Erfindung

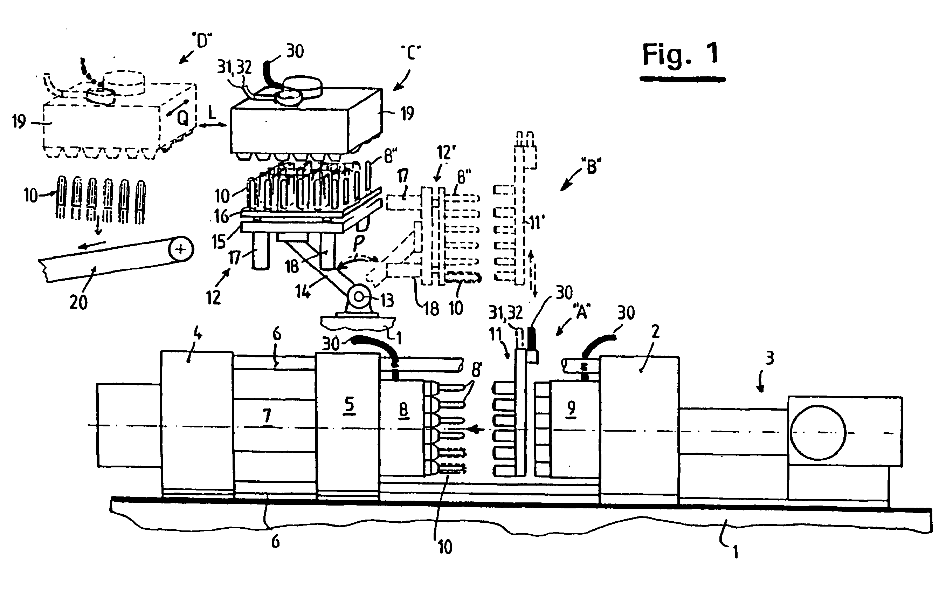

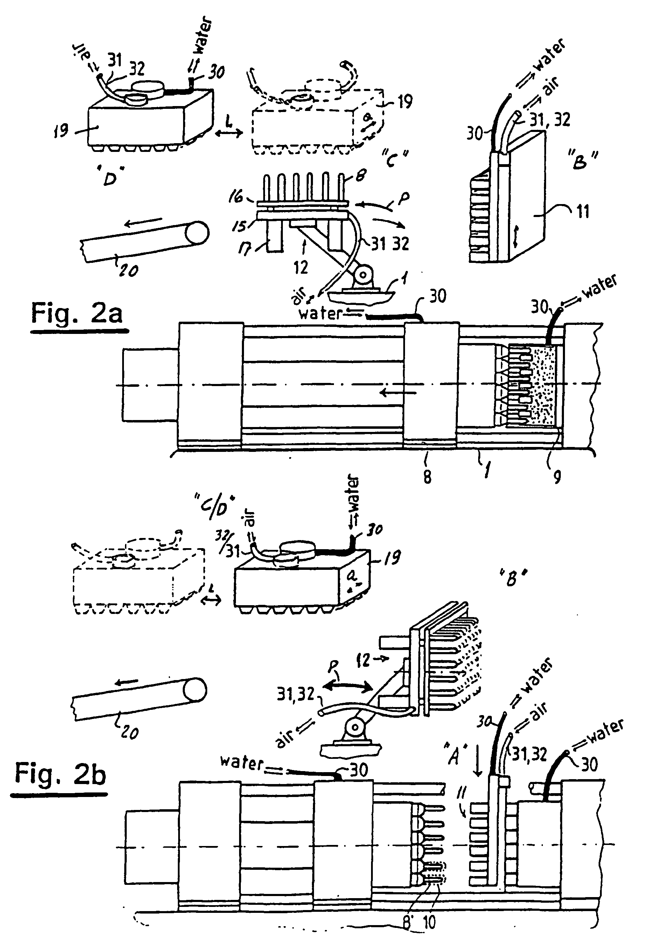

Die Figuren 1 sowie 2a und 2b zeigen eine ganze Spritzgiessmaschlne für Preformen mit einem Maschinenbett 1, auf dem eine feste Formaufspannplatte 2 und eine Spritzeinheit 3 gelagert sind. Eine Abstützplatte 4 und eine bewegliche Formaufspannplatte 5 sind axial verschleblich auf dem Maschinenbett 1 abgestützt. Die feste Formaufspannplatte 5 und die Abstützplatte 4 sind durch vier Holme 6 miteinander verbunden, die die bewegliche Formaufspannplatte 5 durchsetzen und führen. Zwischen der Abstützplatte 4 und der beweglichen Formaufspannplatte 5 befindet sich eine Antrlebseinheit 7 zur Erzeugung des Schliessdruckes. Die feste Formaufspannplatte 2 und die bewegliche Formaufspannplatte 5 tragen jeweils eine Formhälfte 8 und 9, in denen jeweils eine Vielzahl von Teilformen 8' und 9' angeordnet sind, die zusammen Kavitäten zur Erzeugung einer entsprechenden Zahl hülsenförmiger Spritzgiessteile bilden. Die Teilformen 8' sind als Dorne ausgebildet, an denen nach dem Öffnen der Formhälften 8 und 9 die hütsenförmigen Spritzgigssteile 10 haften. Die Spritzgiessieile befinden sich zu diesem Zeitpunkt noch in einem halb erstarrten Zustand und sind mit unterbrochenen Linien angedeutet. Die gleichen Spritzglesstelle 10 im fertig gekühlten Zustand sind in der Figur 1 links oben dargestellt, wo sle gerade aus einer Nachkühleinrichtung 19 ausgeworfen werden. pie oberen Holme 6 sind zum Zweck der besseren Darstellung der Einzelheiten zwischen den geöffneten Formhälften unterbrochen dargestellt.

In den Figuren 2a und 2b sind die vier wichtigsten Handlingsphasen für die Spritzgiessteile nach Abschluss des Giessprozess dargestellt:
"**A**" ist die Entnahme der Spritzgiessteile oder Preformen 10 aus den beiden Formhälften. Die noch halbstarren hülsenförmigen Teile werden dabei von einer In den Raum zwischen den geöffneten Formhälften und in die Position "A" abgesenkten Entnahmevorrichtung 11 aufgenommen und mit dieser in die Position "B" angehoben (Aufnahmevorrichtung 11' in Figur 1).
"**B**" ist die Übergabe-Stellung der Entnahmevorrichtung 11 mit den Preformen 10 an einen Transfergreifer 12 ("B" in Figur 1).
"**C**" ist die Übergabe der Preformen 10 von dem Transfergreifer 12 an eine Nachkühleinrichtung 19.
"**D**" ist der Abwurf der abgekühlten und in einen formstabilen Zustand gebrachten Preforms 10 aus der Nachkühleinrichtung 19.

Die Figur 1 zeigt sozusagen Momentaufnahmen der vier Hauptschritte für des Handling. In der Position "B" werden die senkrecht übereinanderliegend angeordne-ten, hülssnförmigen Spritzgiessteile 10 von dem Transfergreifer 12 bzw. 12' übernommen und durch Verschwenken der Transfervorrichtung in Richtung des Pfeiles P in eine Position, horizontal nebeneinander stehend, gemäss Phase "C", gebracht. Der Transfergreifer 12 besteht aus einem um eine Achse 13 schwenkbaren Haltearm 14, der eine Halteplatte 15 Trägt, zu der im Parallelabstand eine Trägerplatte 16 für Zentrierdorne 8" angeordnet ist. Die Trägerplatte 16 ist mittels zweier Hydraulikeinrichtungen 17 und 18 parallel zur Halteplatte 15 ausstellbar, so dass in der Position "B" die hülsenförmigen Spritzgiessieile 10 aus der Entnahmevorrichtung 11 geholt und in der in die Position "C" geschwenkten Lage in die darüberliegende Nachkühleinrichtung 19 geschoben werden können. Die jeweilige Übergabe erfolgt durch Vergrösserung des Abstandes zwischen der Halteplatte 15 und der Trägerplatte 16. Die noch halbstarren, hülsenförmigen Spritzgiessteile 10 werden in der Nachkühl-einrichtung 19 fertiggekühlt und danach, nach einer Verschiebung der Nachkühl-einrichtung 19, in der Position "D" ausgestossen und auf ein Förderband 20 geworfen.

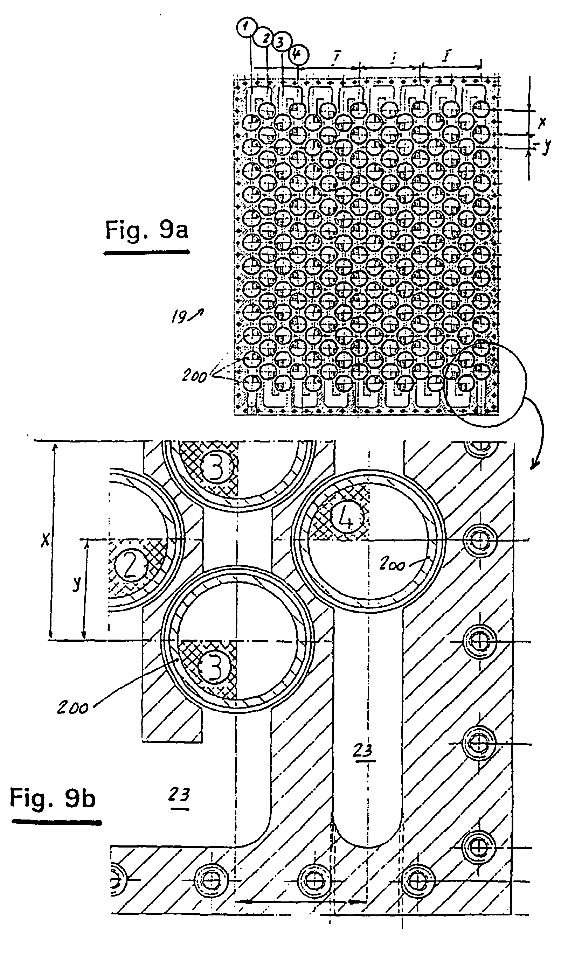

In den Figuren 2a und 2b sind zwei Situationen mit den jeweiligen Kühleingriffsmltteln ebenfalls schematisch, dargestellt. In der Figur 2a sind die beiden Formhälften 8 und 9 in geschlossenen Zustand, also in der eigentlichen Giessphase dargestellt, mit Verbindungsschläuchen für die Kühlmittel, Dabei bedeutet "water" Wasserkühlung und "air" Lufteinwirkung. Die grösste Temperaturabsenkung von etwa 280°C auf 80°C für die Spritzgiessteile 10 geschieht noch innerhalb der geschlossenen Formen 8 und 9, wozu ein enormer Kühlwasserdurchsatz sichergestellt werden muss. Die Entnahmcvorrichtung 11 ist in Figur 2a bereits in einer Warteposition, womit das Ende der Spritzphase angedeutet ist. Das Bezugszeichen 30 ist die Wasserkühlung mit entsprechenden Zu- bzw. Abführleitungen, welche zur Vereinfachung mit Pfeilen angedeutet sind und als bekannt vorausgesetzt werden. Das Bezugszeichen 31/32 bezeichnet die Luftseite, wobei 31 für Einblasen resp. Druckluftzufuhr und 32 für Vakuum resp. Luftabsaugen steht. Damit erkennt man bereits auf der prinzipiellen Ebene die Einsatzmöglichkeiten von Luft (air) und Wesser (water). In den Spritzgiessformen 8 und 9 findet während dem Spritzgiessvorgang eine reine Wasserkühlung statt. Bei der Entnahmevorrichtung 11 kommen sowohl Luft wie Wasser zum Einsatz. Beim Transfer- bzw. Entnahmegreifer 12 besteht nur eine Lufteinwirkung. Bei der Nachkühlvorrichtung 19 dagegen kommen wiederum Luft und Wasser zum Einsatz. Die Figur 2b zeigt den Beginn der Entrahme der Preformen 10 aus den offenen Formhalften. Nicht dargestellt sind die Hilfsmittel für das Abstossen der halbstarren Preforms von den Teileformen 8'. Ein weiterer wichtiger Punkt ist das Handling in dem Bereich der Nachkühlvorrichtung 19. Die Nachkühlvorrichtung kann während der Entnahmephase "A" gemäss Pfeil L horizontal unabhängig verfahren werden, von einer Aufnahmeposition (in Figur 2b mit ausgezogenen Linien dargestellt) in eine Abwurfposition (strichliert dargestellt). Dieser Arbeitsschritt ist in Figur 2b mit "C/D" bezeichnet. Wie mit den Figuren 9a und 9b noch erklärt wird, kann die Nachkühlvorrichtung 19 ein Mehrfaches an Fassungsvermögen gegenüber der Kavltätenzahl in den Spritzgiessformhälften aufweisen. Der Abwurf der fertig gekühlten Preforms 10 kann z.B. erst nach zwei, drei oder mehr Spritzgiesszyklen erfolgen, so dass entsprechend die Nachkühlzeit verlangert wird. Für die Übergabe der Preformen von dem Transfergreifer 12 an die Nachkühleinrichtung 19 kann letztere zusatzlich gemäss Pfeil a querverschoben und in die passende Position gesetzt werden.

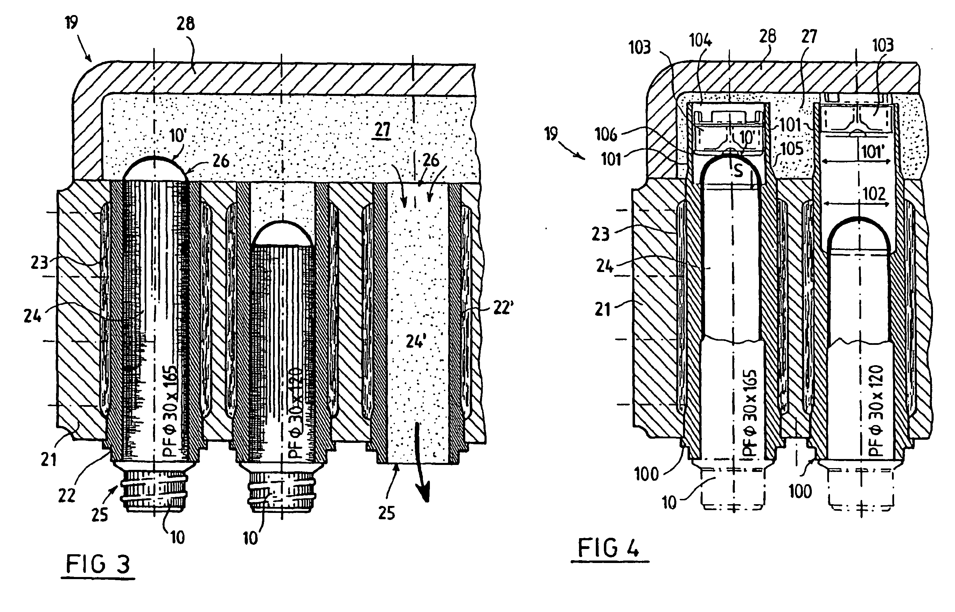

Die Figur 3 zeigt einen Ausschnitt einer Kühlvorrichtung des Standes der Technik mit einem Kühlblock 21, in dem eine Vielzahl von Kühlhülsen 22 (schwarz ausgefüllt) angeordnet sind. Vom Kühlblock 21 und von den Kühlhülsen 22 wird ein Hohlraum 23 umschlossen, der von Kühlwasser (strichliert markiertl durchströmt wird. Der Innenraum 24 der Kühlhülsen 22 dient zur Aufnahme der hülsenförmigen Spritzgiessteile 10 und ist nach oben konisch verjüngend ausgeformt. Am unteren Ende der Kühlhülse 22 befindet sich die Ein- und Ausführöffnung 25, durch die die noch halbstarren Spritzgiessteile eingeführt und aus der die fertigeekühlten Spritzgiessteile 10 ausgestossen werden. Am oberen Ende der Kühlhülse 22 befindet sich eine Öffnung 26 zu einem Luftraum 27, der von einem Deckel 28 umschlossen ist. Die hülsenförmigen Spritzgiessteile 10 stellen sogenannte Preforms zur Herstellung von PET-Flaschen dar, wobei in der linken Kühlhülse eine Preform der Grösse Ø PF 30 x 165 und in der mittleren Kühlhülse eine kürzere Preform der Grösse PF Ø 30 x 120 angeordnet ist. Die noch halbstarren Spritzgiessteile werden nach dem Einschieben in die Kühlhülsen durch einen im Luftraum 27 herrschenden Unterdruck vollständig eingewogen, so dass das Spritzgiessteil in engen Kühlkontakt mit der Innenfläche der Kühlhülse 22 gelangt. Nach Beendigung des Kühlvorgangs werden die nunmehr starren und formstabilen Spritzgiessteile durch Überdruckbeaufschlagung des Luftraums 27 ausgestossen. Bei dieser Kühlvorrichtung nach dem Stand der Technik bzw. Figur 3 besteht das Problem, dass aufgrund von Unregelmässigkeiten in der Fertigung der Formkavitäten für die Spritzgiessteile und der Innenkontur der Kühlhülsen ein oder mehrere Spritzgiessteile verklemmen oder bereits gegen Ende der Kühlphase durch ihr Eigengewicht aus der Kühlhülse fallen können. Dies gilt beson-ders bei Lösungen, bei denen eine Kühlvorrichtung, wie in Figur 3 dargestellt ist, für den Abwurf in eine horizontale Lage gebracht wird. Wird im Luftraum von Unterdruck auf Überdruck geschaltet. um die fertig gekühlten Spritzgiessteile auszustossen, kann sich aufgrund der grossen Strömungsquerschnitte durch vorzeitig freigewordene Kühlhülsen 22' kein ausreichender Druck zum Ausstossen der restlichen Sprrtzgiesstelle aufbauen. Der Produktionszyklus wird durch nicht entleerten Kühlhülsen unterbrochen, bis alle Hülsen, gegebenenfalls von Hand, frei gemacht werden.

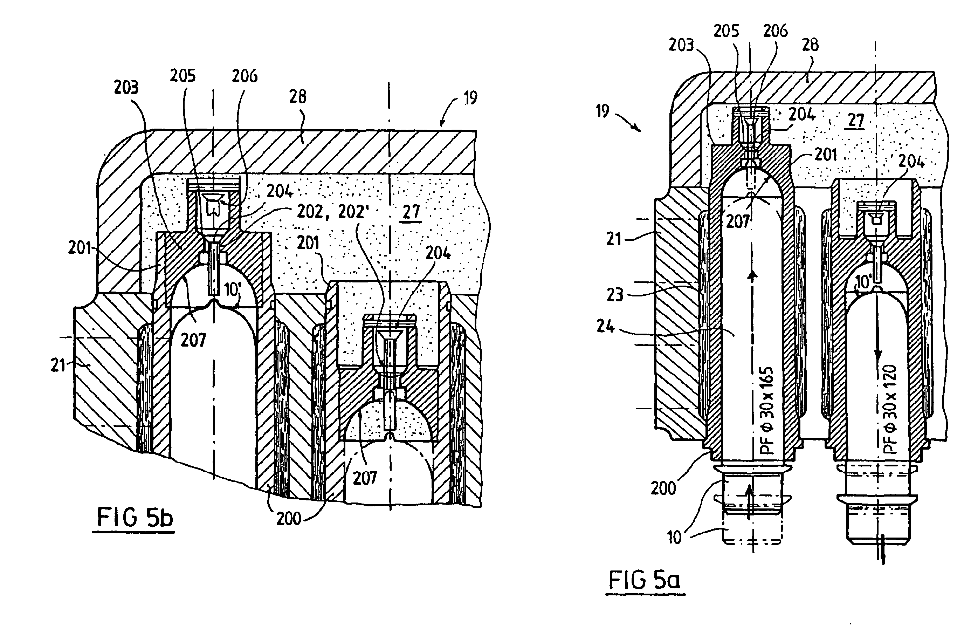

Die Figuren 4, 5a und 5b zeigen Ausführungsformen, bei denen erfindungsgemäss ein gleichzeitiges Ausstossen aller Spritzglessteile 10 am Ende der Kühlphase sichergestellt wird. Die Ausführungsform nach Figur 4 zeigt eine Kühlhülse 100, die an ihrem oberen Ende ein rohrförmiges Ansatzstück 101 aufweist, das in den Luftraum 27 ragt. Der Innendurchmesser 101' des Ansatzstücks 101 ist grösser als der Innenraum 102 der Kühlhülse 100. Im Ansatzstück 101 befindet sich ein mecha-nisch verschiebbares Element in Form eines Kolbens 103, dessen Aussendurchmesser um genügendes Spiel geringer ist als der Innendurchmesser 101' des Ansatzstücks 101, so dass ein definierter Luftspalt gegeben ist. Dieser Luftspalt bildet einen gedrosselten Durchgangskanal 104 zwischen Innenraum der Kühlhülse 100 und dem Luftraum 27. Der Übergang vom grösseren Innenraum des Ansatzstücks 101 zum kleineren Innenraum der Kühlhülse 100 ist in Form eines Ventilsitzringes 105 ausgebildet, zu dem der Kolben 103 einen passenden Ventilsitzring 106 aufweist. In der Kühlphase ragt das in die Kühlhülse 100 eingezogene Spritzgiessteil 10 mit seinem halbkugelförmigen Boden 10' oberhalb des Ventilsitzrings 105 in das Ansatzstück 101. Bei Unterdruckbeaufschlagung des Luftraumes 27 pflanzt sich der Unterdruck über den Durchgangskanal 104 in den Innenraum der Kühlhülse 100 fort und bewirkt ein Einziehen des Spritzgiessteils 10 in die Kühlhülse 100. Nach Beendigung der Kühlphase wird im Luftraum 27 von Unterdruck auf Überdruck geschaltet. Das Spritzgiessteil wird durch den Luftdruck aus der Kühlhülse ausgestossen, wobei sich das Kolbenelement 103 nach unten bewegt. Mit dem Anschlag des Kolbens 103 am Ventilsitzring 105 wird zum einen die Bewegung des Kolbens 103 begrenzt, zum anderen wird jeglicher Luftaustritt vom Luftraum 27 über die entsprechende Kühlhülse 100 gestoppt. Vor dem anschliessenden Befüllen der Kühlhülse 100 mit neuen, noch halbstarren Spritzgiessteilen 10 wird der Kolben 103 durch Unterdruckbeaufschlagung des Luftraumes 27 wieder hochgehoben, wobei gleichzeitig der ringförmige Durchgangskanal 104 zwischen Kolben 103 und Innenwandung des Ansatzstücks 101 wieder geöffnet wird, so dass sich der Unterdruck in den Innenraum der Kühlhülse 100 fortpflanzen und das vollständige Einziehen der Spritzgiessteile 10 bewirken kann. Die Ausführungsformen nach den Figuren 5a und 5b zeigen eine bevorzugte Ausgestaltung mit einer Kühlhülse 200, die an ihrem oberen Ende ein Ansatzstück 201 aufweist, das mit einem, eine Führungsöffnung 202 aufweisenden Verschlusskörper 203 versehen ist. Dieser ist im unteren Bereich mit einer Wölbung 207 versehen, in die das Spritzgiessteil 10 mit seinem halbkugelförmigen Boden 10' eintaucht. In der Führungsöffnung 202 ist ein dünneres Kolbenelement in Form eines Ventilstiftes 204 in axialer Richtung mechanisch verschiebbar geführt, wobei in der zylindrischen Durchgangsöffnung 202 ein Durchgangskanal 202' in Form von Nuten ausgebildet ist. Die Nuten stellen (rechts in Figur 5b) Durchgangspassagen für einen Luftaustausch zwischen dem Luftraum 27 und dem Innenraum der Kühlhülse 200 innerhalb der Wölbung 207 dar und gewährleisten einen Druckaustausch (als Überdruck oder Unterdruck) zwischen dem Raum 27 und dem Inneren der Kühlhülse 200 (innerhalb der Wölbung 207). Die dem Luftraum 27 zugewandte Seite der Durchgangsöffnung 202 weist eine kegelstumpfförmige Erweiterung 205 auf, in die der Ventilstift 204 mit einem entsprechend ausgebildeten kegelförmigen Ventilsitz 206 abdichtend zur Auflage kommen kann (links in Figur 5b mit ausgezogenen Strichen). Für das Befüllen der Kühlhülsen 200 mit noch halbsterren Spritzgiessteilen 10 wird durch die Unterdruckbeaufschlagung des Luftraumes 27 der Ventilstift 204 nach oben gezogen (Figur 5b rechts). Der Unterdruck pflanzt sich vom Luftraum 27 über die Nuten 202' in der Durchgangsöffnung 202 zum Innenraum der Kühlhülse 200 fort und bewirkt das vollständige Einziehen des Spritzgiessteils 10 (Figur 5a links). Nach Beendigung der Kühlphase wird im Luftraum 27 von Unterdruck auf Überdruck geschaltet. Der Ventilstift 204 folgt dem fertig gekühlten Spritzgiessteil mechanisch ein kurzes Wegstück. Der Verschiebeweg des Ventilstiftes 204 wird durch Anschlag seines kegelförmigen Ventilsitzes 206 auf der kegelstumpfförmigen Erweiterung 205 der Durchgangsöffnung 202 begrenzt und ein weiterer Durchtritt von Druckluft vom Luftraum 27 zu dem Innenraum der Kühlhülse abgesperrt. Ein Restdruckluftpolster zwischen der inneren Wölbung 207, der Kühlhülse 200 sowie dem äusseren halbkugelförmigen Boden 10' bewirkt in der Folge das vollständige Ausstossen des Spritzgiessteils 10 mit entsprechendem Luftdruck. Mit den Ausführungsformen gemäss den neuen Lösungen wird sichergestellt, dass bei Überdruckbeaufschlagung des Luftraumes 27 der Überdruck im Luftraum 27 in der erforderlichen Höhe stets erhalten bleibt oder sogar gesteigert werden kann und alle Spritzgiessteile 10 nach der Beendigung des Kühlvorgangs mit einer optimalen Ausstosskraft beaufschlagt werden.

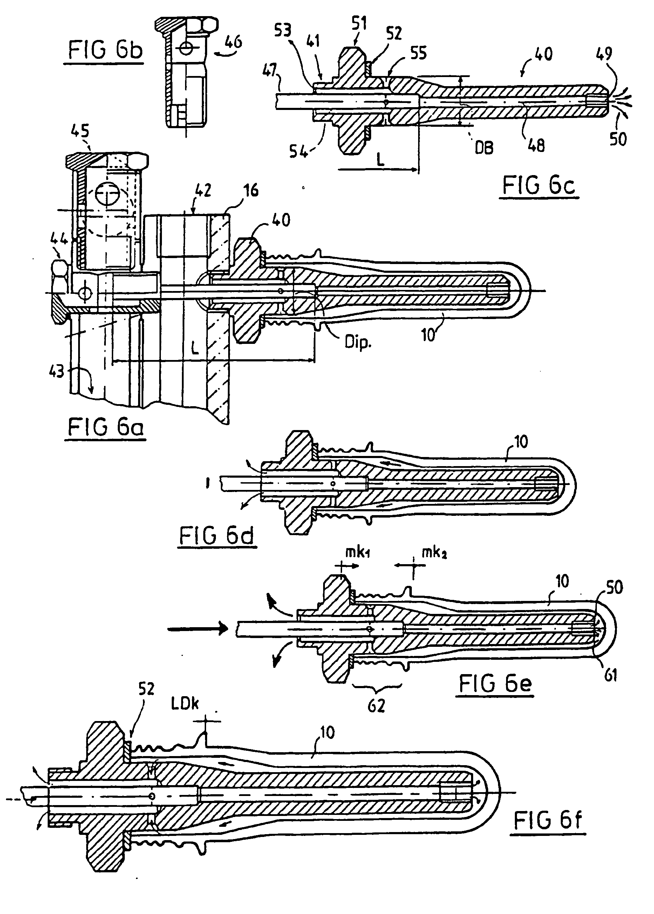

In der Figur 6c ist eine Luftdüse 40 dargestellt. Die Luftdüse 40 wird in der Folge entsprechend ihrer jeweiligen Funktion auch als Blasdorn oder Zentrierdorn bezeichnet. Auf der linken Seite weist die Luttdüse 40 ein Schraubgewinde 41 auf, mittels demselben die Luftdüsen 40 an der Trägerplatte 16 einschraubbar sind. Wie in der Figur 1 dargestellt ist, weist die Trägerplatte 16 eine grössere Zahl Luftdüsen 40 auf, welche je in mehreren Reihen angeordnet sind. In der Trägerplatte 16 sind gemäss Figur 6a zwei Luftkanalsysteme 42 und 43 angeordnet, wobei das Luftsystem 42 für Unterdruck bzw. Vakuum (Figur 6d), und das Luftsystem 43 für Druckluft ausgelegt ist (Figur 6e) mit entsprechenden, nicht dargestellten Anschlüssen für einen Drucklufterzeuger bzw. ein Sauggebläse oder eine Vakuumpumpe. Damit die beiden Luftsysteme sauber getrennt werden können, sind an den Übergängen Spezialschrauben 44, 45 sowie 46 mit erforderlichen Ausnehmungen für eine Montage sowie Durchdringung der jeweiligen Verbindungsstücke vorgesehen. Die Spezialschrauben 44, 45 und 46 müssen zwingend in der richtigen Reihenfolge ein- bzw. ausgeschraubt werden. Im fertig montierten Zustand sollen die beiden Luftsysteme gegeneinander abgedichtet ihre je eigene Funktion erfüllen können. Für die Druckluftseite wird ein Blasrohr 47 entsprechend der Länge "l" in der richtigen Montagereihenfolge eingeschoben und führt die Blasluft über eine Bohrung 48 in der Luftdüse 40 bis zur Blasmündung 49, von wo ein Blasluftstrahl 50 ausbläst. Für das feste Einschrauben des Schraubgewindes 41 ist an der Luftdüse 40 ein 6-Kant-Schlüsselansatz 51, auf der Gegenseite ein Dichtring 52 angebracht. Die Saugluftverbindung 53 geht über einen Ringkanal 54 sowie mehrere Querbohrungen 55, welche nahe an dem Dichtring 52 den Ringkanal 54 nach aussen verbinden. Daraus ergibt sich, dass Luft über die Blasmündung 49 ausgeblasen und über die Querbohrungen 55 wieder angesaugt werden kann. Flexible Luftschläuche 31 und 32 stellen die Verbindung zu entsprechendem Druckluft- oder Sauglufterzeugern dar (Figuren 1,2a und 2b).

Die Figur 6a zeigt das Endstück der Trägerplatte 16 mit einer eingeschraubten Luttdüse 40 sowie einer Preform 10. Der äussere Durchmesser DB an der Luftdüse 40 in dem Bereich des Dichtringes 52 ist um ein genügendes Spiel kleiner als der entsprechende innere Durchmesser Dip der Preform 10. Dadurch ergibt sich, unterstützt durch die Luftströmungskräfte, eine Zentrierwirkung für die Preform 10 auf den Luftdüsen bzw. Blasdornen 40. Die Figuren 6d, 6e und 6f zeigen nun drei verschiedene Phasen für die Luftführung: In der Figur 6d ist die Blasluftzufuhr gestoppt. Dagegen wird Luft vom Inneren der Preforms 10 abgesaugt, so dass ein Unterdruck im Innenraum des Spritzgiessteiles entsteht, wodurch die Preform kräftig an den Dichtring 52 zentriert und angesaugt wird. Mit anderen Worten werden dadurch alle Preforms an der Transfervorrichtung sicher gehalten und können über entsprechende Verschwenkbewegungen in die nächstfolgende Position gebracht werden. Die Figur 6e zeigt die andere Extremsituation. Dabei wird in maximal möglicher Stärke ein Blastuftstrahl 50 auf das innere Bodenteil der Preform 10 geblasen zur entsprechend maximal möglichen Kühlwirkung an der Stelle. Die Blasluft muss gezwungenermassen abgesaugt werden, damit eine starke positive Luftströmung erhalten bleibt. Es ergibt sich daraus ein sehr wichtiger Aspekt, in dem nicht nur der Preformboden 61 sondern auch das Preformgewindeteil 62 kräftig gekühlt wird. Damit die beschriebene, grösstmögliche Luftkühlwirkung sichergestellt werden kann, müssen mit mechanischen Kräften mk1 sowie mk2 die Preform gehalten werden. Die Figur 6f zeigt eine weitere Situation, bei der sowohl Luft eingeblasen wie abgesaugt wird. Blasluft und Saugluft können so eingestellt werden, dass im Inneren der Preform 10 ein leichter Unterdruck erhallen und die Preform 10 durch die Luftdruckkräfte LDk angesaugt und damit auch zentriert bleibt.

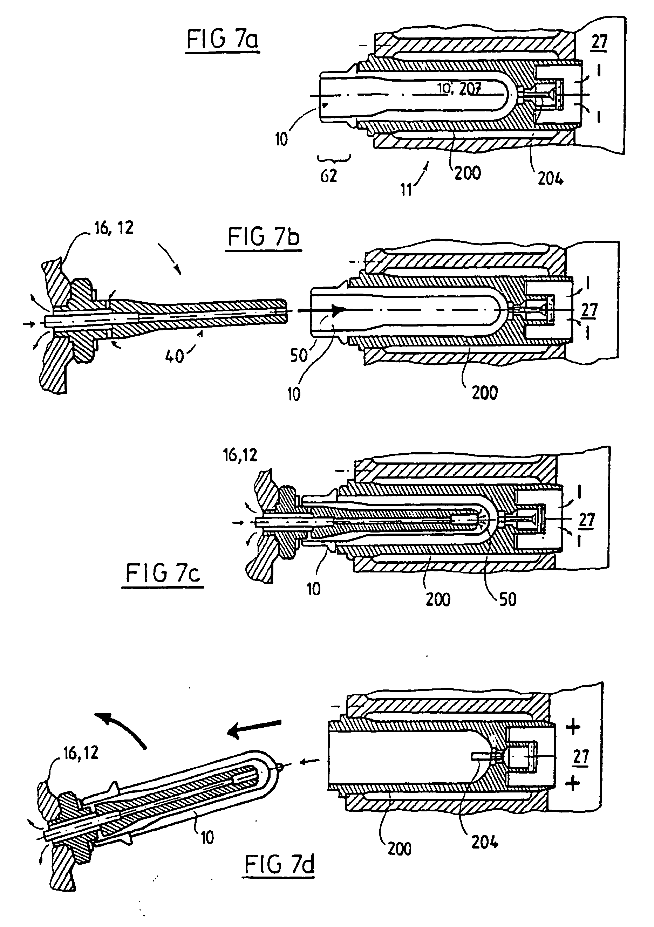

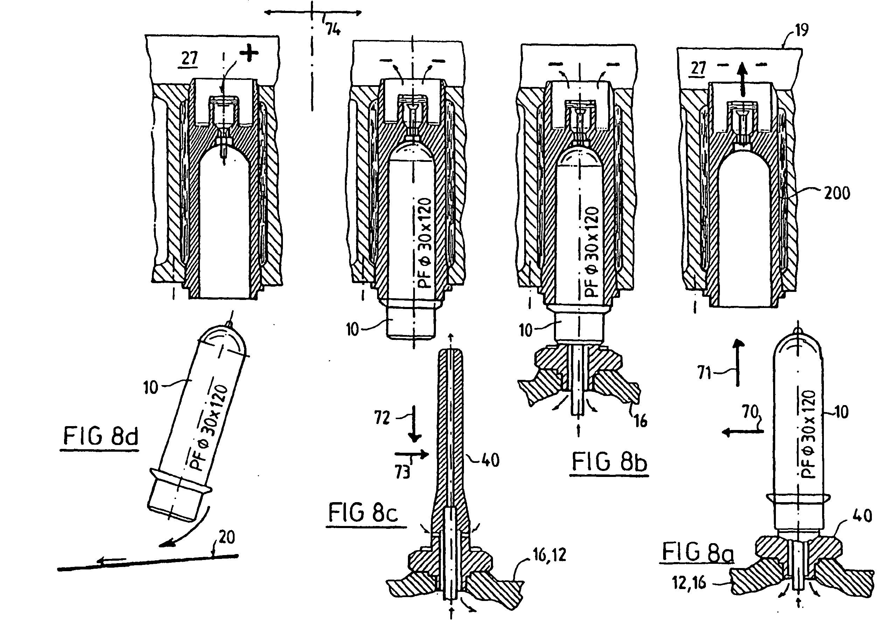

Die Figuren 7a bis 7d und 8a bis 8d zeigen die besonderen Übergänge beim Handling von der Entnahmevorrichtung 11 zu dem Transfergreifer 12 einerseits sowie dem Transfergreifer 12 zu der Nachkühleinrichtung 19 anderseits. In der Figur 7a Ist die Preform 10 vollständig von der Entnahmevorrichtung 11 übernommen. Damit alle Preformen 10 vollständig in der Kühlhülse 200 bzw. der Wölbung 207 anliegen, ist in dem Luftraum 27 Unterdruck eingestellt, was mit den Minuszeichen angedeutet ist. Der Ventilstift 204 ist angehoben, so dass der Unterdruck sich auf den halbkugelförmigen, äusseren Boden 10' auswirkt und diesen voll in die Wölbung 207 einsaugt. Die Preformen sind dadurch fest in den Kühlhülsen 200, gleichsam auf Anschlag gehalten. In der Figur 7b fahren nun die Luftdüsen bzw. Zentrierdorne durch Vorschieben der Halteplatte 16 in die Preformen 10 ein. Saugluft und Blasluft sind entsprechend Figur 6f aktiviert. Im Luftraum 27 bleibt vorerst Unterdruck. Nachdem die Blasdorne vollständig eingefahren sind, beginnt die stärkste Kühlphase (7c), wobei von aussen mit Wasser und von innen mittels Luft, entsprechend Figur 6e, über einige Sekunden eingewirkt wird. Nach Ablauf, z.B. von etwa 5 Sekunden, werden die Luftverhältnisse umgekehrt. In dem Luftraum 27 wird schlagartig auf Überdruck (+) geschaltet, so dass die Preform 10 ausgestossen und nach der ersten Ausstossbewegung der Ventilstift 204 sofort den Luftabströmquerschnitt verschliesst. Auf Seiten der Blasdorne 40 wird, koordiniert mit der Umstellung der Druckverhältnisse Im Luftraum 27, auf Vakuum entsprechend Figur 6d geschaltet, so dass die Preformen 10 mit maximaler Saugkraft auf den Blasdornen 40 gehalten werden. Die Stosskraft der Druckluft im Luftraum 27 ergänzt die Saugkraft auf der Gegenseite.

In der Figur 8a ist die nachfolgende Phase dargestellt. Der Transfergreifer 12 steht mit der Trägerplatte 16 vor dem Abschluss der Verschwenkbewegung, wie mit Pfeil 70 angedeutet ist. Gleichzeitig beginnt die Trägerplatte 16 durch Betätigung einer Pneumatik- oder Hydraulikeinrichtung, sich in Richtung Nachkühleinrichtung 19 zuzubewegen und schiebt die Preformen 10 in die Kühlhülsen 200 der Nachkühleinrichtung 19. Das Einschieben der Preformen ist insofern nicht besondere heikel, als dass diese, gestützt durch die mechanischen Bewegungskräfte der Trägerplatte 16, zwangsweise erfolgt. In dem Luftraum 27 wurde auf Unterdruck geschaltet, so dass allein durch die Saugkräfte des Unterdruckes im Luftraum 27 die Preformen auch hier auf Anschlag festgehalten werden. Je nach gewählter Zyklusdauer kann die Luftkühlwirkung in der Phase von Figur 8a bis 8c optimiert werden. Die Trägerplatte 16 muss wieder in die Übernahmeposition (B in Figur 1) zurückfahren. Die Blasdorne 40 fahren gemäss Figur 8c entsprechend Pfeil 72 aus den Preformen 10 und bewegen sich nach Pfeil 73 in umgekehrter Richtung zu der Figur 8a wieder zurück in die Position B. In Figur 8c sind die Preformen 10 in den Kühlhülsen 200 noch durch den Unterdruck (-) festgehalten. Die Figur 8d stellt den Auswurf der Preformen 10 als letzten Akt der Nachkühlung dar. Wie bereits zuvor erwähnt, können zwischen der Situation nach Figur 8c und 8d ein, zwei bzw. mehrere Giesszyklen sein bzw. die Nachkühlung entsprechend lange dauern. Für den Ausstoss wird in dem Luftraum 27 sofort auf Druck umgestellt, so dass die Preformen 10 durch den Luftdruck ausgestossen und auf ein Band 20 abgeworfen werden. Die Nachkühleinrichtung 19 wird entsprechend Pfeil 74, sinngemäss zu den Figuren 2a und 2b, verfahren.

Ein Teilziel der neuen Lösung lag darin, die Nachkühlzeit von dem eigentlichen Giesszyklus, soweit erforderlich, unabhängig zu machen. Zu diesem Zweck weist die Nachkühleinrichtung gemäss Figuren 9a und 9b mehrere parallel angeordnete Reihen ①, ②, ③, ④ auf. Beim gezeigten Beispiel sind in einer Reihe jeweils 12 Kühlhülsen 200 für die Aufnahme je einer Preform. Die Kühlhülsen 200 können in Bezug auf die Verhältnisse in den Giessformteilungen schr viel enger angeordnet werden. Es wird deshalb nicht nur mehrere parallele Reihen, sondern zusätzlich eine Versetzung der Reihen vorgeschlagen, wie aus dem Schnitt der Figuren 9a und 9b mit den Massangaben x resp. y zum Ausdruck kommt. Dies bedeutet, dass für einen ersten Giesszyklus die Kühlrohre mit Nummern ①, für einen zweiten Giesszyklus die Kühlrohre mit Nummern ②, usw. versehen werden. Sind beim Beispiel mit vier Parallel-Reihen auch alle Reihen mit Nr. ④ gefüllt, werden die Reihen mit Nr. ①, wie beschrieben, als erste ausgestossen und auf das Förderband 20 abgeworfen. Der Rest folgt über die ganze Produktionszeit folgerichtig. Im gezeigten Beispiel entspricht die gesamte Nachkühlzeit etwa vier mal der Giesszeit.

Wichtig ist dabei, dass die Kühlräume 23 für die Wasserkühlung optimal angeordnet sind, damit die Wasserkühlung bei allen Kühlrohren möglichst einheitlich und bestmöglich wirkt. Anderseits müssen die Luftdruck- bzw. Unterdruckverhaftnisse in der Nachkühleinrichtung reihenweise steuerbar sein, damit zu einem bestimmten Zeitpunkt alle Reihen ① oder ②, usw, gleichzeitig aktiviert werden können. Eine entsprechende Reihenanordnung ist in der Figur 6a angedeutet

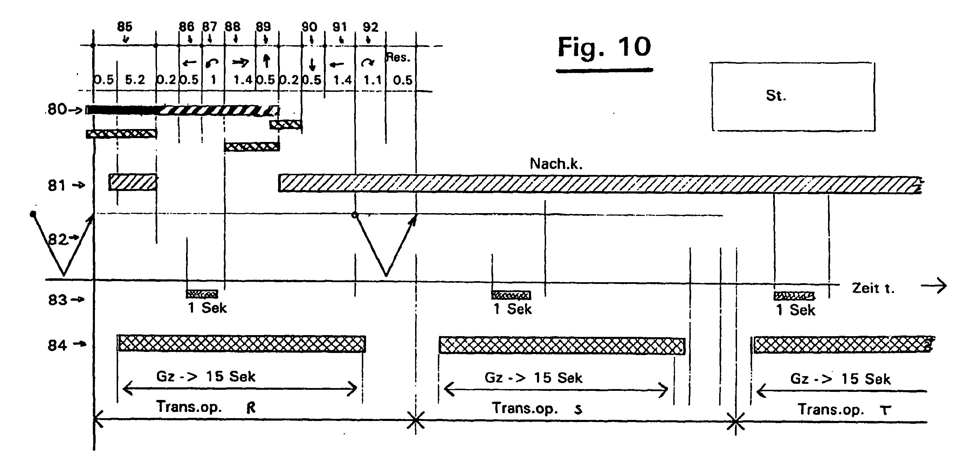

Die Figur 10 zeigt beispielhaft die zyklischen Schritte in zeitlicher Hinsicht. Die horizontalen Balken 80 stellen die Luftkühlung und die horizontalen Balken 81 die Wasserkühlung der. Die unterste zeitliche Massangabe Trans op bedeutet eine erste Transferoperation R, eine zweite S, eine dritte T, usw. Dargestellt sind drei Transferoperationen und darüber entsprechend Gz - 15 Sek. je ein Giesezyklus 84 mit einer Deuer von jeweils 15 Sekunden. Das Bezugszeichen 83 bedeutet Abwurf der fertig gekühlten Preformen 10, was etwa eine Sekunde beansprucht. Das Bezugszeichen 82 stellt die Entnahme der halbstarren Preformen 10 aus den Formhälften dar. Eine einzelne, vollständige Transferoperation ist im linken oberen Bildteil in die wichtigsten Teilschritte aufgegliedert. Es bedeuten 85 Entnahme, 86 Ausfahren, 87 Transfergreifer/Schwenken, 88 Kühlblock auf, 89 Kühlblock laden, 90 Kühlblock vakumieren, 91 Kühlblock wegfahren, 92 Transfergreifer schwenken. Unter den Bezugszeichen ist mit den Zahlen 0.5, 5.2, usw. eine ungefähre Zeitangabe in Sekunden für die Einzelschritte angegeben. St. steht für die Steuermittel für die Anlage bzw. die entsprechende Funktionseinheit.

## Patentansprüche

1. Verfahren für das chargenweise Herstellen einer grösseren Zahl von einseitig mit einem Boden (10') verschlossenen hülsenförmigen Spritzgiessteilen (10), welche nach dem Spritzvorgang den Formen (8, 9) entnommen und nachgekühlt werden und dabei unter Zuhilfenahme von Luft als Druckluft oder Vakuum in Wasserkühlrohre (22, 30, 200) eingeschoben und wieder ausgestossen und von einem halbstarren Zustand beim Öffnen der Formhälften (8, 9) mittels Wasserkühlung in einen formstabilen Lagerzustand gebracht und einen Weitertransport (20) übergeben werden,
**dadurch gekennzeichnet,**
**dass** im Nachkühlbereich den Spritzgiessteilen (10) zur Verbesserung der luftseitigen Einwirkung mechanisch verschiebbare Elemente zugeordnet sind,
**dass** für den Bereich des offenen Einschiebeendes der Wasserkühlrohre (22, 30, 200) die verschiebbaren Elemente als Luftdüsen (40) ausgebildet sind, welche zyklisch in die Spritzgiessteile (10) eingeschoben werden, und Behandlungsluft in das Innere der Spritzgiessteile (10) einbringen und absaugen, und
**dass** die Spritzgiessteile (10) durch eine Entnahmevorrichtung (11) aus den geöffneten Formen (8, 9) entnommen und über einen Transfergreifer (12) einer Nachkühleinrichtung (19) und im formstabilen Lagerzustand von der Nechkühleinrichtung (19) an einen Weitertransport (20) übergeben werden, wobei die Übergabe der Spritzgiessteile (10) durch Luftdüsen (40) für eine Innenkühlung der Spritzgieseteile (10), die am Transfergreifer (12) angeordnet sind, erfolgt.

2. Verfahren nach Anspruch 1,
**dadurch gekennzeichnet,**
**dass** die Spritzgiessteile (10) für die Nachkühlung unter Zuhilfenahme von Luft als Druckluft oder Vakuum in die Wasserkühlrohre (22, 30, 200) eingeschoben und wieder ausgestossen werden, wobei dem Einschiebeende der Wasserkühlrohre (22, 30, 200) gegenüberliegend ein steuer- und kontrollierbarer Druck- bzw. Unterdruckraum (27) vorgesehen ist, und zwischen dem Druckraum (27) sowie dem Innenraum der Kühlrohre (22, 30, 200) verschiebbare Elemente angeordnet und als Ventilelemente (204), vorzugsweise als Kolbenelemente ausgebildet sind, so dass durch die Ventilwirkung die Spritzgiessteile bei Unterdruck angesaugt und sicher gehalten und bei Überdruck das Ausstossen der Spritzgiessteile (10) unterstützt wird.

3. Verfahren nach Anspruch 2,
**dadurch gekennzeichnet,**
**dass** den Wasserkühlrohren (22, 30, 200) auf der Seite des Druck- bzw. Unterdruckraumes (27) ein gewölbtes Bodenteil (207) zugeordnet ist, derart, dass zwecks Intensivierung der Wasserkühlwirkung das Spritzgiessteil (10) mit seinem halbkugelförmigen Boden (10') in das gewölbte Bodenteil (207) des Wasserkühlrohres (22, 30, 200) eintaucht bzw. durch den Unterdruck gleichsam auf Anschlag eingesaugt wird.

4. Verfahren nach Anspruch 3.
**dadurch gekennzeichnet, dass** das gewölbte Bodenteil (207) spielfrei mit dem Wasserkühlrohr (22, 30, 200) verbunden, bzw. Teil des Wasserkühlrohres (22, 30, 200) ist und eine Durchgangsöffnung mit einem darin verschieblich angeordneten Ventilstift (204) aufweist, derart, dass bei Unterdrcuk in dem Druckraum eine Durchgangsöffnung in das Innere des Wasserkühlrohres (22, 30, 200) frei gibt, und bei Überdruck in dem Druckraum (27) der Ausstossvorgang für das Spritzgiessteil (10) unterstützt wird.

5. Verfahren nach einem der Ansprüche 1 bis 4,
**dadurch gekennzeichnet,**
**dass** eine übergeordnete Steuerung vorgesehen ist, welche taktmässig die Transportschritte und zyklisch die Kühlphasen koordiniert steuert, wobei insbesondere die Bewegungszyklen der Entnahmevorrichtung (11) des Transfergreifers (12) sowie der Nachkühleinrichtung (19) bevorzugt unabhängig einstellbar sind.

6. Verfahren nach Anspruch 5,
**dadurch gekennzeichnet,**
**dass** die Transfereinheit mittels der Luftdüsen (40) bzw. Zentrierdome die Spritzgiessteile von dem Entnahmevorrichtung (11) in einer horizontalen Lage übemehmen, in eine aufrechte Lage verschwenken und in die wassergekühlten Hülsen (200) der Nachkühleinrichtung (19) schieben.

7. Verfahren nach Anspruch 5 oder 6,
**dadurch gekennzeichnet,**
**dass** bei der Übergabe der Spritzgiessteile (10) von der Entnahmevorrichtung (11) die Luftdüsen (40) in einer eingeschobenen Position während mehreren Sekunden verharren für eine Intensivblaskühlung, besonders des halbkugelformigen Bodens (10') an der Innenseite der Spritzgiessteile (10).

8. Verfahren nach einem der Ansprüche 5 bis 7,
**dadurch gekennzeichnet,**
**dass** die Druckverhältnisse beidseits der Spritzgiessteilböden (10') unabhängig steuerbar sind, so dass insbesondere koordiniert ein Blasluftstrom und/oder ein Unterdruckzustand erzeugt wird und entsprechend die Spritzgiessteile durch Unterdruck auf der einen oder anderen Seite gehalten bzw. durch einen Druckstoss in die eine oder andere Richtung ausstossbar sind.

9. Verfahren nach einem der Ansprüche 5 bis 8,
**dadurch gekennzeichnet,**
**dass** die Luftdüsen (40) als Saugblasdome ausgebildet sind mit Saugöffnungen für den Bereich des offenen Endes der Spritzgiessteile, derart, dass gesteuert verschiedene Betriebszustände einstellbar sind, z.B. ein dominanter Luftblasstrahl in dem Bereich des verschlossenen Bodenendes (10') im Inneren der Spritzgiessteile (10) oder eine starke Vakuumwirkung Innerhalb des Spritzgiessteils (10) oder eine Mischform zwischen den beiden.

10. Verfahren nach Anspruch 1,
**dadurch gekennzeichnet,**
**dass** der Transfergreifer (12) und die Entnahmevorrichtung (11) für die Aufnahme einer gleichen Zahl von Spritzgiessteilen (10) konzipiert sind wie das Spritzgiesswerkzeug (8, 9), wobei die Nachkühleinrichtung (19) parallel angeordnet Zwei- oder Mehrfachreihen von vorzugsweise versetzten wassergekühlten Hülsen (200) aufweist, so dass durch entsprechendes Querverschieben und Längsverschieben die Nachkühleinrichtung (19) zwei oder mehrere Chargen von Spritzgiessteilen (10) je eines Spritzgiesszyklus zur Reduktion der Giesszykluszeit und Erhöhung der Nachkühlzeit aufnehmen kann.

11. Verfahren nach einem der Ansprüche 1 bis 10,
**dadurch gekennzeichnet,**
**dass** die Phase der Entnahme der Spritzgiessteile (10) aus den Formhälften (8, 9) und der vollständigen Übergabe an die Nachkühlsinrichtung (19) angenähert der Zeitdauer eines Glesszyklus, und die totale Nachkühtzeit wenigstens der zwei bis dreifachen Glesszykluszeit entspricht und eine doppelte Kühlung von innen und aussen auf die Spritzgissteile (10) während einem bedeutenden Anteil der Giesszykluszeit unmittelbar nach der Entnahme der Spritzgiessteile (10) vorgenommen wird.

12. Verfahren nach einem der Anspruche 1 bis 11,
**dadurch gekennzeichnet,**
**dass** wenigstens die Ausstossung der Spritzgiessteile (10) durch Luftdruck luftseitig unterstützt erfolgt, und die Wasserkühlung am Ende der Spritzgiessteileentnahme sowie am Anfang der Nachkühlung durch mechanisch in das Innere der Spritzgiessteile (80) verschiebbare Luftblasdüsen (40) ergänzt wird.

13. Spritzgiessmaschine zur Herstellung von hülsenförmigen, einseitig mit einem Boden (10') verschlossenen Spritzgiessteilen (10), bestehend aus einem Formschlfess- und Öffnungsmechanismus, Entnahme- und Nachkühleinrichtungen (11, 19), bei denen zumindest entsprechend der Zahl der pro Zyklus hergestellten Spritzgiessteile (10) Wasserkühlrohre (22, 30, 200), für die Spritzgiessteile (10) vorgesehen sind, wobei der Einschiebeseite für die Spritzgiessteile (10) gegenüberliegend und mit dem Kühlrohraufhahmeraum für die Spritzgiessteile (10) verbunden ein Druck- bzw. Unterdruckraum (27) angeordnet ist,
**dadurch gekennzeichnet,**
**dass** wenigstens je ein mechanisch verschiebbares Element für die Optimierung der Lufteinwirkung auf jedes Spritzgiessteil (10) vorgesehen ist,
**dass** das verschiebbare Element in dem Bereich des Kühlrohreinschiebeendes für die Spritzgiessteile (10) angeordnet und als Luftdüse (40) ausgebildet ist, und
**dass** sie einen Transfergreifer (12) mit, entsprechend der Zahl der zu kühlenden Spritzgiessteile (10), Luftdüsen (40) für eine Innenkühlung der Spritzgiessteile (10) aufweist, über welche die Spritzgiessteile (10) von der Entnahmevorrichtung (11) in die Nachkühleinrichtung (19) übergebbar sind,
wobei die Luftdüsen als Saugblasdorne ausgebildet sind.

14. Spritzgiessmeschine nach Anspruch 13,
**dadurch gekennzeichnet,**
**dass** die Luftdüsen (40) in das Innere der jeweiligen Spritzgiessteile (10) einschiebbar ausgebildet sind, wobei eine Öffnung der Luftdüsen an der Blasdomspitze bevorzugt bis nahe an den Boden (10') der Spritzgiessteile (10) positionierbar sind.

15. Spritzgiessmaschine nach Anspruch 13 bis 14,
**dadurch gekennzeichnet,**
**dass** die Luftdüsen (40) auf einer Halteplatte (15) angeordnet und als Transfergreifer (12) eine unabhängig steuerbare Baueinheiten bilden, wobei an dem Transfergreifer (12) die Luftdüsen (40) als Zentrierdorne ausgebildet sind, zur Übernahme der Spritzgiessteile (10) von der Entnahmevorrichtung (11) in einer horizontalen Lage und Verschwenkung, in eine aufrechte Lage und anschliessendem Einschieben in die Wasserkühlrohre (200) der Nachkühleinrichtung (19).

16. Spritzgiessmaschine nach einem der Ansprüche 13 bis 15,
**dadurch gekennzeichnet,**
**dass** sie eine wassergekühlte Entnahmevorrichtung (11) und einen Luftkühlmittel aufweisenden Transfergreifer (12), sowie eine wassergekühlte Nachkühleinrichtung 19), ferner eine übergeordnete Steuerung (St.) aufweist, über welche taktmässig die Bewegungsschritte sowie zyklisch die Kühlphasen koordiniert steuerbar sind, derart, dass von der Entnahme der Spritzgiessteile (10) bis zum Abwurf am Ende der Nachkühlphase ohne Unterbruch wenigstens eine Kühlung aktivierbar ist.

17. Spritzgiessmaschine nach einem der Ansprüche 13 bis 16,
**dadurch gekennzeichnet,**
**dass** die Nachkühleinrichtung (19) schlittenartig in einer horizontalen Ebene von einer exakten Übernahmeposition über der Transfereinheit in eine Auswerfposition Ober ein Transportband (20) für eine Aufnahme bzw. Abwurf der Spritzgiessteile (10) längs und/oder quer verschiebbar ist.

18. Spritzgiessmaschine nach Anspruch 16,
**dadurch gekennzeichnet,**
**dass** der Transfergreifer (12) und die Entnahmevorrichtung (11) für die Aufnahme einer gleichen Zahl von Spritzgiessteilen (10) bestückbar sind, wie das Spritzgiesswerkzeug (8, 9) und die Nachkühleinrichtung (19) parallel und gegebenenfalls versetzt angeordnet Zwei- oder Mehrfachreihen von wassergekühlten Hülsen (200) aufweist, so dass durch entsprechendes längs- und/oder querverschieben die Nachkühleinrichtung (19) zwei oder mehrere Chargen von Spritzgiessteilen (10) je eines Spritzgiesszyklus zur Reduktion der Giesszykluszeit und Erhöhung der Kühlzelt aufnehmen kann.

19. Spritzgiessmaschine nach Anspruch 13,
**dadurch gekennzeichnet,**
**dass** wenigstens je in mechanisch verschiebbares Element für die Optimierung der Lufteinwirkung auf jedes Spritzgiessteil (10) vorgesehen ist, wobei die verschiebbaren Elemente als Ventilstiften (204), insbesondere Kolbenelemente (103) ausgebildet sind, zur ökonomischen Sicherstellung eindeutiger Über- oder Unterdruckverhältnisse, derart, dass mit denen in die Kühlrohre (22, 30, 200) eingezogene Spritzgiessteile (10) bei Überdruckbeaufschlagung des Druckraums (29) sicher ausstossbar sind, und dass bei Schalten auf Unterdruck im Druckraum (27) in einem Durchgangskanal zwischen Druckraum und Innenraum der Kühlrohre (22, 30, 200) ein Unterdruck erzeugbar ist, zur Ansaugung der Spritzgiessteile (10).

20. Spritzgiessmaschine nach Anspruch 13 oder 14,
**dadurch gekennzeichnet,**
**dass** die Wasserkühlrohre (22, 30, 200) auf der Seite des Druckraumes (27) inwendig gewölbte Badenteile (207), passend für entsprechend halbkugelförmige Böden (10') der Spritzgiessteile (10) aufweisen, wobei das verschiebbare Element in der Form eines Ventilstiftes (204) in dem gewölbten Bodenteil (207) integriert ist.

## Claims

1. Method for batchwise production of a relatively larger number of tubular injection moulded parts (10), closed at one end by a base (10'), which are removed from the moulds (8, 9) after the injection process and post-cooled and in the process are inserted into water cooling pipes (22, 30, 200) with the aid of air as compressed air or vacuum and ejected again and are brought by water cooling from a semi-rigid state when the mould halves (8, 9) are opened into a dimensionally stable storage state and are transferred to a further conveying system (20), **characterised in that** in the post-cooling zone mechanically displaceable elements are associated with the injection moulded parts (10) to improve the action on the air side, that the displaceable elements are formed as air nozzles (40) for the region of the open insertion end of the water cooling pipes (22, 30, 200), the air nozzles being inserted cyclically into the injection moulded parts (10) and introducing processing air into the interior of the injection moulded parts (10) and extracting it, and that the injection moulded parts (10) are removed from the opened moulds (8, 9) by a removal device (11) and transferred via a transfer gripper (12) to a post-cooling apparatus (19) and in the dimensionally stable storage state from the post-cooling apparatus (19) to a further conveying system (20), the transfer of the injection moulded parts (10) taking place via air nozzles (40) for interior cooling of the injection moulded parts (10) arranged on the transfer gripper (12).

2. Method according to claim 1, **characterised in that** the injection moulded parts (10) are inserted into the water cooling pipes (22, 30, 200) for post-cooling with the aid of air as compressed air or vacuum and are ejected again, a controllable and checkable pressure or vacuum chamber (27) being provided lying opposite the insertion end of the water cooling pipes (22, 30, 200) and displaceable elements being arranged between the pressure chamber (27) and the interior of the cooling pipes (22, 30, 200) and being formed as valve elements (204), preferably as plunger elements, so owing to the valve effect the injection moulded parts are sucked in and held securely by a vacuum and ejection of the injection moulded parts (10) is assisted by excess pressure.

3. Method according to claim 2, **characterised in that** a curved base part (207) is associated with the water cooling pipes (22, 30, 200) on the side of the pressure or vacuum chamber (27), in such a way that the injection moulded part (10) with its hemispherical base (10') is immersed into the curved base part (207) of the water cooling pipe (22, 30, 200) to intensify the water cooling effect or is sucked in by the vacuum as it were as far as it will go.

4. Method according to claim 3, **characterised in that** the curved base part (207) is connected without play to the water cooling pipe (22, 30, 200), or is part of the water cooling pipe (22, 30, 200) and has a through-aperture with a valve pin (204) arranged displaceably therein, in such a way that in the event of a vacuum in the pressure chamber it exposes a through-aperture into the interior of the water cooling pipe (22, 30, 200) and in the event of excess pressure in the pressure chamber (27) the ejection process for the injection moulded part (10) is assisted.

5. Method according to any one of claims 1 to 4, **characterised in that** a higher-level controller is provided which, in a coordinated manner, controls the conveying steps clockwise and the cooling phases cyclically, in particular the movement cycles of the removal device (11) of the transfer gripper (12) and the post-cooling apparatus (19) preferably being independently adjustable.

6. Method according to claim 5, **characterised in that** by means of the air nozzles (40) and the centring mandrels the transfer unit receives the injection moulded parts from the removal device (11) in a horizontal position, swivels them into an upright position and pushes them into the water-cooled sleeves (200) of the post-cooling apparatus (19).

7. Method according to claim 5 or 6, **characterised in that** when the injection moulded parts (10) are transferred from the removal device (11), the air nozzles (40) remain in an inserted position for several seconds for intensive jet cooling, in particular of the hemispherical base (10') on the interior of the injection moulded parts (10).

8. Method according to any one of claims 5 to 7, **characterised in that** the pressure conditions on either side of the injection moulded part bases (10') can be controlled independently, so in particular an air jet and/or a vacuum state is produced in a coordinated manner and the injection moulded parts are accordingly held on the one or other side by a vacuum or can be ejected by a pressure impact in one or other direction.

9. Method according to any one of claims 5 to 8, **characterised in that** the air nozzles (40) are formed as mandrels for air introduction and extraction with suction apertures for the region of the open end of the injection moulded parts, in such a way that various operating states can be adjusted in a controlled manner, for example a dominant air jet in the region of the closed base end (10') in the interior of the injection moulded parts (10) or a strong vacuum effect inside the injection moulded part (10) or a mixture of the two.

10. Method according to claim 1, **characterised in that** the transfer gripper (12) and the removal device (11) are designed for receiving an identical number of injection moulded parts (10) to the injection mould (8, 9), the post-cooling apparatus (19) having two or multiple rows of preferably offset water-cooled sleeves (200) arranged in parallel, so by corresponding transverse displacement and longitudinal displacement the post-cooling apparatus (19) can receive two or more batches of injection moulded parts (10) per injection moulding cycle to reduce the moulding cycle time and increase the post-cooling time.

11. Method according to any one of claims 1 to 10, **characterised in that** the phase of removal of the injection moulded parts (10) from the mould halves (8, 9) and of complete transfer to the post-cooling apparatus (19) corresponds approximately to the duration of an injection cycle and the total post-cooling time corresponds to at least twice to three times the injection cycle time and double cooling is undertaken from the inside and outside on the injection moulded parts (10) during a significant portion of the injection cycle time directly after removal of the injection moulded parts (10).

12. Method according to any one of claims 1 to 11, **characterised in that** at least the ejection of the injection moulded parts (10) takes place assisted by air pressure on the air side, and the water cooling at the end of removal of the injection moulded parts and at the beginning of post-cooling is completed by air jet nozzles (40) which are mechanically displaceable into the interior of the injection moulded parts (10).

13. Injection moulding machine for producing tubular injection moulded parts (10) which are closed at one end by a base (10'), consisting of a mould closing and opening mechanism, removal and post-cooling apparatuses (11, 19), in which water cooling pipes (22, 30, 200) are provided for the injection moulded parts (10) at least according to the number of injection moulded parts (10) produced per cycle, a pressure or vacuum chamber (27) being arranged lying opposite the insertion side for the injection moulded parts (10) and being connected to the cooling pipe receiving space for the injection moulded parts (10), **characterised in that** at least in each case one mechanically displaceable element is provided for optimising the action of air on each injection moulded part (10), that the displaceable element is arranged in the region of the cooling pipe insertion end for the injection moulded parts (10) and is constructed as an air nozzle (40), and that it has a transfer gripper (12) with air nozzles (40) according to the number of injection moulded parts (10) to be cooled for interior cooling of the injection moulded parts (10), via which air nozzles (40) the injection moulded parts (10) can be transferred from the removal device (11) into the post-cooling apparatus (19), wherein the air nozzles are constructed as mandrels for air introduction and extraction.

14. Injection moulding machine according to claim 13, **characterised in that** the air nozzles (40) are formed so as to be insertable into the interior of the respective injection moulded parts (10), an aperture of the air nozzles being positionable on the jet mandrel tip preferably close to the base (10') of the injection moulded parts (10).

15. Injection moulding machine according to claim 13 to 14, **characterised in that** the air nozzles (40) are arranged on a holding plate (15) and as transfer gripper (12) form an independently controllable component, the air nozzles (40) being formed as centring mandrels on the transfer gripper (12) to receive the injection moulded parts (10) from the removal device (11) in a horizontal position and to swivel them into an upright position and subsequently insert them into the water cooling pipes (200) of the post-cooling apparatus (19).

16. Injection moulding machine according to any one of claims 13 to 15, **characterised in that** it has a water-cooled removal device (11) and a transfer gripper (12) having air-cooling means, and a water-cooled post-cooling apparatus (19) and also a higher-order controller (St.) via which the movement steps can be controlled clockwise and the cooling phases cyclically, in a coordinated manner in such a way that at least one cooling can be activated from removal of the injection moulded parts (10) to ejection at the end of the post-cooling phase, without interruption.

17. Injection moulding machine according to any one of claims 13 to 16, **characterised in that** the post-cooling apparatus (19) can be displaced longitudinally and/or transversely in the manner of a carriage in a horizontal plane from an exact receiving position via the transfer unit into an ejection position via a conveyor belt (20) for receiving or ejection of the injection moulded parts (10).

18. Injection moulding machine according to claim 16, **characterised in that** the transfer gripper (12) and the removal device (11) can be equipped to receive the same number of injection moulded parts (10) as the injection mould (8, 9), and the post-cooling apparatus (19) has double or multiple rows of water-cooled sleeves (200) arranged in parallel and optionally offset, so by appropriate longitudinal and/or transverse displacement, the post-cooling apparatus (19) can receive two or more batches of injection moulded parts (10) per injection moulding cycle to reduce the moulding cycle time and increase the cooling time.

19. Injection moulding machine according to claim 13, **characterised in that** at least one respective mechanically displaceable element for optimising the action of the air is provided on each injection moulded part (10), the displaceable elements being formed as valve pins (204), in particular plunger elements (103), for the economic assurance of clear excess pressure or vacuum conditions, in such a way that injection
moulded parts (10) drawn in thereby into the cooling pipes (22, 30, 200) can be reliably ejected when the pressure chamber (27) is loaded with excess pressure and **in that** a vacuum can be created in a through-duct between the pressure chamber and interior of the cooling pipes (22, 30, 200) to suck in the injection moulded parts (10) in the event of switching to vacuum in the pressure chamber (27).

20. Injection moulding machine according to claim 13 or 14, **characterised in that** the water cooling pipes (22, 30, 200) on the side of the pressure chamber (27) have base parts (207) curved inwardly and adapted for corresponding hemispherical bases (10') of the injection moulded parts (10), the displaceable element in the form of a valve pin (204) being integrated in the curved base part (207).

## Revendications

1. Procédé pour la production par charges d'un plus grand nombre de pièces moulées par injection en forme d'enveloppes (10), fermées à une extrémité par un fond (10'), qui sont retirées des moules (8, 9) après le processus d'injection et soumises à un refroidissement secondaire en étant insérées dans des tubes de refroidissement à eau (22, 30, 200) au moyen d'air comme de l'air comprimé ou du vide, puis de nouveau éjectées et transformées d'un état à moitié solide lors de l'ouverture des demi-moules (8, 9) dans un état indéformable de stockage au moyen d'un refroidissement à eau et transmises à une installation de transport (20), **caractérisé en ce que** dans la zone de refroidissement secondaire, des éléments déplaçables mécaniquement sont affectés aux pièces moulées par injection (10) pour l'optimisation de l'effet d'aération, que pour la zone située à la limite d'insertion ouverte des tubes de refroidissement à eau (22, 30, 200), les éléments déplaçables sont formés en tant que buses d'air (40) qui sont insérées par cycles dans les pièces moulées par injection (10) et qui injectent et aspirent de l'air de traitement à l'intérieur des pièces moulées par injection (10), et que les pièces moulées par injection (10) sont retirées des moules ouverts (8, 9) par un dispositif d'enlèvement (11) et transférées par un grappin de transfert (12) à un dispositif de refroidissement secondaire (19), et dans un état indéformable de stockage, du dispositif de refroidissement secondaire (19) vers une installation de transport (20), moyennant quoi le transfert des pièces moulées par injection (10) s'effectue grâce à des buses d'air (40), qui servent au refroidissement interne des pièces moulées par injection (10) qui sont placées sur le grappin de transfert (12).

2. Procédé selon la revendication 1, **caractérisé en ce que** les pièces moulées par injection (10) sont insérées dans les tubes de refroidissement à eau (22, 30, 200) pour leur refroidissement secondaire au moyen d'air comme de l'air comprimé ou du vide et de nouveau éjectées, moyennant quoi est prévue une zone de pression ou de dépression (27) qu'on peut piloter et contrôler, située face à la limite d'insertion des tubes de refroidissement à eau (22, 30, 200) et des éléments déplaçables sont situés entre la zone de pression (27) et la zone interne des tubes de refroidissement à eau (22, 30, 200) et sont conçus comme des éléments de soupape (204), de préférence des éléments de piston, de telle sorte que les pièces moulées par injection soient aspirées et maintenues avec sécurité par l'effet de soupape quand il y a dépression et que l'éjection des pièces moulées par injection (10) soit stimulée quand il y a surpression.

3. Procédé selon la revendication 2, **caractérisé en ce qu'**une partie du fond cintrée (207) est affectée aux tubes de refroidissement à eau (22, 30, 200) sur le côté de la zone de pression ou de la zone de dépression (27), de façon à ce que la pièce moulée par injection (10) soit plongée avec son fond hémisphérique (10') dans la partie du fond cintrée (207) du tube de refroidissement à eau (22, 30, 200) ou aspirée de façon uniforme par la dépression pour venir s'y encastrer.

4. Procédé selon la revendication 3, **caractérisé en ce que** la partie du fond cintrée (207) est reliée sans jeu au tube de refroidissement à eau (22, 30, 200), ou bien est une partie du tube de refroidissement à eau (22, 30, 200) et présente une ouverture de passage avec une cheville de soupape (204) se déplaçant à l'intérieur, de façon à ce qu'en cas de dépression dans la zone de pression, une ouverture de passage autorise le passage vers l'intérieur du tube de refroidissement à eau (22, 30, 200) et qu'en cas de surpression dans la zone de pression (27), le processus d'éjection des pièces moulées par injection (10) soit stimulé.

5. Procédé selon l'une des revendications 1 à 4, **caractérisé en ce qu'**une commande supérieure est prévue, qui commande la coordination entre la cadence des étapes de transport et le cycle des phases de refroidissement, moyennant quoi en particulier les cycles de mouvement du dispositif d'enlèvement (11) du grappin de transfert (12) ainsi que du dispositif de refroidissement secondaire (19) peuvent être réglés de préférence de façon indépendante.

6. Procédé selon la revendication 5, **caractérisé en ce que** l'unité de transfert prend en charge au moyen des buses d'air (40) ou d'épines de centrage les pièces moulées par injection à partir du dispositif d'enlèvement (11) en position horizontale, les fait basculer en position verticale et les pousse dans les enveloppes refroidies par eau (200) du dispositif de refroidissement secondaire (19).

7. Procédé selon la revendication 5 ou 6, **caractérisé en ce que** lors du transfert des pièces moulées par injection (10) du dispositif d'enlèvement (11), les buses d'air (40) restent en position rentrée pendant plusieurs secondes pour un refroidissement par soufflage intensif, en particulier refroidissement du fond hémisphérique (10') sur le côté interne des pièces moulées par injection (10).

8. Procédé selon l'une des revendications 5 à 7, **caractérisé en ce que** les rapports de pression des deux côtés des fonds des pièces moulées par injection (10') peuvent être commandés indépendamment, de telle sorte que soit produit, en particulier avec coordination, un courant d'air de soufflage et/ou un état de dépression et que conformément à cela, les pièces moulées par injection puisent être maintenues par la dépression d'un côté ou d'un autre respectivement puissent être éjectées par un coup de bélier dans l'une ou l'autre direction.

9. Procédé selon l'une des revendications 5 à 8, **caractérisé en ce que** les buses d'air (40) sont conçues comme des épines soufflantes aspirantes avec des orifices aspirants pour la zone de l'extrémité ouverte des pièces moulées par injection, de façon à ce que différents états de fonctionnement commandés puissent être réglés, par exemple un jet dominant d'air soufflé dans la zone de l'extrémité du fond fermé (10') à l'intérieur des pièces moulées par injection (10) ou un fort effet de vide à l'intérieur de la pièce moulée par injection (10) ou bien un mélange entre les deux.

10. Procédé selon la revendication 1, **caractérisé en ce que** le grappin de transfert (12) et le dispositif d'enlèvement (11) sont, comme le moule pour injection (8, 9), conçus pour recevoir un même nombre de pièces moulées par injection (10), moyennant quoi le dispositif de refroidissement secondaire (19) présente, deux ou plusieurs rangées, montées de façon parallèle, d'enveloppes (200) refroidies par eau et de préférence disposées en quinconce, de telle sorte que grâce au mouvement transversal et longitudinal correspondant, le dispositif de refroidissement secondaire (19) peut recevoir deux ou plusieurs charges de pièces moulées par injection (10) pour chaque cycle de moulage par injection afin de réduire le temps d'un cycle de moulage et d'augmenter le temps de refroidissement secondaire.

11. Procédé selon l'une des revendications 1 à 10, **caractérisé en ce que** la durée de la phase de l'enlèvement des pièces moulées par injection (10) hors des demi-moules (8, 9) et du transfert complet vers le dispositif de refroidissement secondaire (19) se rapproche de la durée d'un cycle de moulage et que la durée totale de refroidissement secondaire correspond au moins de deux à trois fois au moins à la durée d'un cycle de moulage et qu'un double refroidissement de l'intérieur et de l'extérieur des pièces moulées par injection (10) est réalisé pendant une partie importante de la durée du cycle de moulage directement après l'enlèvement des pièces moulées par injection (10).

12. Procédé selon l'une des revendications 1 à 11, **caractérisé en ce qu'**au moins l'éjection des pièces moulées par injection (10) s'effectue par pression d'air, stimulée en parement aval, et **en ce que** le refroidissement à eau est complété à la fin de l'enlèvement des pièces moulées ainsi qu'au début du refroidissement secondaire par les buses de soufflage d'air (40) se déplaçant mécaniquement à l'intérieur des pièces moulées par injection (10).

13. Machine de moulage par injection pour la production des pièces moulées par injection (10) en forme d'enveloppes, dont une extrémité est fermée par un fond (10'), composée d'un mécanisme de fermeture et d'ouverture du moule, de dispositifs d'enlèvement et de refroidissement secondaire (11, 19), où sont prévus des tubes de refroidissement à eau (22, 30, 200) pour les pièces moulées par injection (10) correspondant au moins au nombre de pièces moulées par injection (10) produites par cycle, moyennant quoi une zone de pression ou de dépression (27) est placée face au côté d'insertion pour les pièces moulées par injection (10) et est reliée à la zone de réception des tubes de refroidissement pour les pièces moulées par injection (10), **caractérisé en ce qu'**au moins un élément déplaçable mécaniquement est prévu sur chaque pièce moulée par injection (10) pour l'optimisation de l'effet d'aération, que l'élément déplaçable est disposé dans la zone de la limite d'insertion des pièces moulées par injection (10) et est conçu en tant que buse d'air (40), et qu'elle présente un grappin de transfert (12) comprenant, conformément au nombre des pièces moulées par injection (10) à refroidir, des buses d'air (40) pour un refroidissement intérieur des pièces moulées par injection (10), par lesquelles les pièces moulées par injection (10) peuvent être transmises du dispositif d'enlèvement (11) au dispositif de refroidissement secondaire (19), moyennant quoi les buses d'air sont conçues comme des épines soufflantes aspirantes.

14. Machine de moulage par injection selon la revendication 13, **caractérisée en ce que** les buses d'air (40) sont conçues pour pouvoir être insérées à l'intérieur de chaque pièce moulée par injection (10), moyennant quoi un orifice de buses d'air peut être positionné de préférence à la pointe des épines soufflantes aspirantes, le plus près du fond (10') des pièces moulées par injection (10).

15. Machine de moulage par injection selon les revendications 13 et 14, **caractérisée en ce que** les buses d'air (40) sont placées sur une plaque de support (15) et forment, comme grappin de transfert (12), une unité de construction à commande indépendante, moyennant quoi sur le grappin de transfert (12), les buses d'air (40) sont conçues comme des épines de centrage, pour assurer la prise en charge des pièces moulées par injection (10) par le dispositif d'enlèvement (11) en position horizontale et le basculement dans une position verticale, puis enfin l'insertion dans les tubes de refroidissement (200) du dispositif de refroidissement secondaire (19).

16. Machine de moulage par injection selon l'une des revendications 13 à 15, **caractérisée en ce qu'**elle présente un dispositif d'enlèvement (11) refroidi par eau et un grappin de transfert (12) présentant un moyen de refroidissement à air, ainsi qu'un dispositif de refroidissement secondaire refroidi par eau (19), et en outre une commande supérieure (St), par laquelle peut être commandée la coordination entre la cadence des étapes de mouvement et le cycle des phases de refroidissement, de façon à ce qu'au moins un refroidissement puisse être activé sans interruption de l'enlèvement des pièces moulées par injection (10) jusqu'à leur libération à la fin de la phase de refroidissement secondaire.

17. Machine de moulage par injection selon l'une des revendications 13 à 16, **caractérisée en ce que** le dispositif de refroidissement secondaire (19) peut être coulissé de façon transversale et/ou longitudinale sur un plan horizontal à partir d'une position exacte de prise en charge par l'unité de transfert vers une position d'éjection par une bande de transport (20) pour une réception ou une libération des pièces moulées par injection (10).

18. Machine de moulage par injection selon la revendication 16, **caractérisée en ce que** le grappin de transfert (12) et le dispositif d'enlèvement (11) peuvent être chargés d'un même nombre de pièces moulées par injection (10), de même que le moule par injection (8, 9), et le dispositif de refroidissement secondaire (19) présente deux ou plusieurs rangées d'enveloppes (200) refroidies par eau montées en parallèle et le cas échéant disposées en quinconce de telle sorte que grâce au déplacement longitudinal et/ou transversal correspondant, le dispositif de refroidissement secondaire (19) peut recevoir deux ou plusieurs charges de pièces moulées par injection (10) pour chaque cycle de pièces moulées pour réduire la durée de cycle de moulage et augmenter la durée de refroidissement.

19. Machine de moulage par injection selon la revendication 13, **caractérisée en ce qu'**au moins un élément déplaçable mécaniquement est prévu sur chaque pièce moulée par injection (10) pour l'optimisation de l'effet d'aération, moyennant quoi les éléments déplaçables sont conçus comme des chevilles de soupape (204), en particulier des éléments de piston (103), pour la préservation économique de rapports univoques de surpression ou de dépression, de façon à ce qu'avec ceux-ci les pièces moulées par injection (10) insérées dans les tubes de refroidissement (22, 30, 200) puissent être éjectées de façon sûre lorsque la zone de pression (27) est alimentée en surpression, et de façon à ce qu'une dépression puisse être produite dans un canal de passage situé entre la zone de pression et l'espace intérieur des tubes de refroidissement (22, 30, 200) lors de la commutation en vue de la dépression dans la zone de pression (27), et ce pour l'aspiration des pièces moulées par injection (10).

20. Machine de moulage par injection selon la revendication 13 ou 14, **caractérisée en ce que** les tubes de refroidissement à eau (22, 30, 200) présentent, du côté de la zone de pression (27), des parties de fond (207) cintrées vers l'intérieur, qui correspondent aux fonds hémisphériques correspondants (10') des pièces moulées par injection (10), moyennant quoi l'élément déplaçable est intégré sous forme d'une cheville de soupape (204) dans la partie de fond cintrée (207).
